(19) **Europäisches Patentamt / European Patent Office / Office européen des brevets**

(11) **EP 4 589 258 A1**

(12) # EUROPEAN PATENT APPLICATION
published in accordance with Art. 153(4) EPC

(43) Date of publication:
23.07.2025 Bulletin 2025/30

(21) Application number: 23865110.3

(22) Date of filing: 01.08.2023

(51) International Patent Classification (IPC):
$G01C\ 21/34^{(2006.01)}$     $B60L\ 15/20^{(2006.01)}$
$B60L\ 50/60^{(2019.01)}$     $B60L\ 53/14^{(2019.01)}$
$B60L\ 58/12^{(2019.01)}$     $G08G\ 1/0969^{(2006.01)}$

(52) Cooperative Patent Classification (CPC):
B60L 15/20; B60L 50/60; B60L 53/14; B60L 58/12;
G01C 21/34; G08G 1/0969

(86) International application number:
PCT/JP2023/028098

(87) International publication number:
WO 2024/057750 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.09.2022 JP 2022145737

(71) Applicant: HONDA MOTOR CO., LTD.
Tokyo 105-8404 (JP)

(72) Inventors:
• NAKAMURA, Hidenobu
Osaka-shi, Osaka 541-0041 (JP)
• KUBOTA, Akihide
Osaka-shi, Osaka 541-0041 (JP)
• KUDO, Jun
Wako-shi, Saitama 351-0193 (JP)
• SADANO, Hakaru
Wako-shi, Saitama 351-0193 (JP)

(74) Representative: Weickmann & Weickmann
PartmbB
Postfach 860 820
81635 München (DE)

(54) **CHARGER SEARCH DEVICE, CHARGER SEARCH METHOD, AND COMPUTER PROGRAM**

(57) A charger search device includes: a required supplemental power amount calculation unit that calculates, based on an amount of remaining power of a battery at a first point, and power consumption, a required supplemental power amount that is an amount of power expected to be insufficient when an electric vehicle equipped with the battery travels on a first route that is composed of a road link on which the electric vehicle is planned to travel from the first point to a second point; a chargeable power amount estimation unit that estimates, based on the power consumption, a chargeable power amount to the battery at a time point when the electric vehicle passes through a speed change prediction point at which a change in a travel speed of the electric vehicle on the first route is expected; a planned charge amount calculation unit that calculates a planned charge amount to the battery, based on the required supplemental power amount and a predetermined margin; and a charger search unit that searches for a charger capable of charging the battery, based on the chargeable power amount and the planned charge amount.

EP 4 589 258 A1

# FIG. 4

CHARGER SEARCH DEVICE — 5

CONTROL UNIT — 50

54 — ROUTE SEARCH UNIT

55 — INFORMATION ACQUISITION UNIT

56 — ROUTE DIVISION UNIT

57 — SPEED CORRECTION UNIT

58 — SPEED MODEL CALCULATION UNIT

59 — TOTAL WEIGHT ACQUISITION UNIT

60 — TRAVEL ENERGY ESTIMATION UNIT

61 — REQUIRED SUPPLEMENTAL POWER AMOUNT CALCULATION UNIT

62 — CHARGEABLE POWER AMOUNT ESTIMATION UNIT

64 — PLANNED CHARGE AMOUNT CALCULATION UNIT

65 — CHARGER SEARCH UNIT

66 — CHARGER SELECTION UNIT

51 — COMMUNICATION UNIT

52 — STORAGE DEVICE

53

## Description

### TECHNICAL FIELD

The present disclosure relates to a charger search device, a charger search method, and a computer program. This application claims priority on Japanese Patent Application No. 2022-145737 filed on September 14, 2022, the entire content of which is incorporated herein by reference.

### BACKGROUND ART

In recent years, electric vehicles (EVs) driven by electric motors have become popular as a countermeasure against global warming, and a countermeasure against energy problems such as depletion of oil resources. As electric vehicles become more popular, charging facilities such as charging stations provided with chargers that charge batteries mounted on the electric vehicles are also being developed.

In order to prevent an electric vehicle from running out of power during traveling to an arrival point, it has been considered to select a charging station provided with a charger according to a remaining amount of power of the battery (see Patent Literatures 1, 2, for example).

### CITATION LIST

### PATENT LITERATURE

PATENT LITERATURE 1: Japanese Laid-Open Patent Publication No. 2003-262525

PATENT LITERATURE 2: Japanese Laid-Open Patent Publication No. H10-170293

### SUMMARY OF THE INVENTION

A charger search device according to an aspect of the present disclosure includes: a route acquisition unit configured to acquire a first route that is composed of a road link on which an electric vehicle equipped with a battery is planned to travel from a first point to a second point; a route division unit configured to divide the first route into one or more sections, each section including a speed change prediction point at which a change in a travel speed of the electric vehicle is expected, each section being composed of one or a plurality of road links; a speed model acquisition unit configured to acquire a speed model for each section, the speed model indicating a temporal transition of the travel speed of the electric vehicle; a power consumption estimation unit configured to estimate, based on the speed model acquired for each section, power consumption in a case where the electric vehicle travels on the section; a required supplemental power amount calculation unit configured to calculate a required supplemental power amount that is an amount of power expected to be insufficient when the electric vehicle travels on the first route, based on an amount of remaining power of the battery at the first point, and the power consumption; a chargeable power amount estimation unit configured to estimate, based on the power consumption, a chargeable power amount to the battery at a time point when the electric vehicle passes through the speed change prediction point on the first route; a planned charge amount calculation unit configured to calculate a planned charge amount to the battery, based on the required supplemental power amount and a margin of a predetermined power amount; and a charger search unit configured to search for a charger capable of charging the battery, based on the chargeable power amount and the planned charge amount.

### BRIEF DESCRIPTION OF DRAWINGS

FIG. 1 shows an entire configuration of a charger search system according to an embodiment of the present disclosure.
FIG. 2 is a block diagram showing an example of a configuration of a traffic information providing server according to the embodiment of the present disclosure.
FIG. 3 is a block diagram showing an example of a configuration of an in-vehicle device according to the embodiment of the present disclosure.
FIG. 4 is a block diagram showing an example of a configuration of a charger search device according to the embodiment of the present disclosure.

FIG. 5 shows an example of a speed model of a guide section in which an upstream guide point is a right or left turn point.

FIG. 6 shows an example of a speed model of a guide section in which an upstream guide point is a traffic signal installation point.

FIG. 7 shows an example of a speed model of a guide section in which an upstream guide point and a downstream guide point do not correspond to either a right or left turn point or a traffic signal installation point.

FIG. 8 shows an example of a speed model in which an upstream guide point does not correspond to either a right or left turn point or a traffic signal installation point, and a downstream guide point corresponds to a traffic signal installation point.

FIG. 9 illustrates an example of a procedure for creating a speed model for one guide section by combining a plurality of speed models.

FIG. 10 illustrates an example of a procedure for creating a speed model for one guide section by combining a plurality of speed models.

FIG. 11 illustrates an example of a procedure for creating a speed model for one guide section by combining a plurality of speed models.

FIG. 12 is a sequence diagram showing an example of processing of a charger search system according to the embodiment of the present disclosure.

FIG. 13 is a sequence diagram showing an example of processing of the charger search system according to the embodiment of the present disclosure.

FIG. 14 shows an example of a route searched by a charger search device.

FIG. 15 shows an enlarged view of a part, surrounded by a broken line circle, of the searched route shown in FIG. 14.

FIG. 16 shows an example of guide points that are set on a searched route through a guide section division process.

FIG. 17 shows data of guide sections generated by the guide section division process.

FIG. 18 is a flowchart showing a speed model calculation process (step S16 in FIG. 12) in detail.

FIG. 19 shows a speed change based on a speed model, calculated by the charger search device, of the target vehicle during traveling on a searched route.

FIG. 20 shows a speed change when the target vehicle actually travels on the same searched route as that shown in FIG. 19.

FIG. 21 shows the number of candidate chargers that is the number of chargers existing near a route from each guide point to an arrival point, and the battery condition at each guide point.

FIG. 22 shows an example of guide points and charger positions set on a searched route.

FIG. 23 schematically shows a searched route passing through the position of a candidate charger, and a searched route not passing through the position of the candidate charger.

FIG. 24 is a flowchart showing an example of a charger selection process according to Embodiment 2 of the present disclosure.

FIG. 25 is a flowchart showing an example of a charger selection process according to Embodiment 3 of the present disclosure.

FIG. 26 shows the number of candidate chargers that is the number of chargers existing near a route from each guide point to an arrival point, and the battery condition at each guide point.

## DETAILED DESCRIPTION

[Problems to be solved by the present disclosure]

According to the conventional charging station selection method, search for a charging station is started from a point where the remaining battery power falls below a certain value. Therefore, if a charging station is not found in a route from this point to an arrival point, the electric vehicle cannot arrive at the arrival point due to a power shortage.

In addition, efforts are being made to utilize electric vehicles as power sources for supplying electric power to areas affected by power outages due to disasters such as earthquakes or floods. When an electric vehicle is utilized as a power source, the electric vehicle needs to arrive at a disaster-stricken area with electric power to be supplied remaining. However, the conventional charging station selection method may cause a delay in searching for a charging station as described above, and therefore, even if the electric vehicle can arrive at an arrival point, the electric vehicle may not be able to supply a necessary amount of electric power.

In disaster-stricken areas or the like, it is also important to supply electric power at designated times. Therefore, it is also required to minimize the charging time before arriving at the arrival point. A similar problem also exists in supplying electric power at a site such as an event site where supply of electric power is desired.

The present disclosure has been made in view of the above circumstances, and it is an object of the present disclosure to provide a charger search device, a charger search method, and a computer program that allow an electric vehicle to arrive at an arrival point without causing a power shortage, and suppress a battery charging time to a time as short as possible.

[Effect of the present disclosure]

According to the present disclosure, it is possible to allow an electric vehicle to arrive at an arrival point without causing a power shortage, and suppress a battery charging time to a time as short as possible.

[Outline of embodiment of the present disclosure]

First, the outlines of embodiments of the present disclosure are listed and described.

(1) A charger search device according to an embodiment of the present disclosure includes: a route acquisition unit configured to acquire a first route that is composed of a road link on which an electric vehicle equipped with a battery is planned to travel from a first point to a second point; a route division unit configured to divide the first route into one or more sections, each section including a speed change prediction point at which a change in a travel speed of the electric vehicle is expected, each section being composed of one or a plurality of road links; a speed model acquisition unit configured to acquire a speed model for each section, the speed model indicating a temporal transition of the travel speed of the electric vehicle; a power consumption estimation unit configured to estimate, based on the speed model acquired for each section, power consumption in a case where the electric vehicle travels on the section; a required supplemental power amount calculation unit configured to calculate a required supplemental power amount that is an amount of power expected to be insufficient when the electric vehicle travels on the first route, based on an amount of remaining power of the battery at the first point, and the power consumption; a chargeable power amount estimation unit configured to estimate, based on the power consumption, a chargeable power amount to the battery at a time point when the electric vehicle passes through the speed change prediction point on the first route; a planned charge amount calculation unit configured to calculate a planned charge amount to the battery, based on the required supplemental power amount and a margin of a predetermined power amount; and a charger search unit configured to search for a charger capable of charging the battery, based on the chargeable power amount and the planned charge amount.

According to this configuration, the first route is divided into one or more sections, each being composed of one or a plurality of road links, based on the speed change prediction point. Therefore, the section length is ensured to be always equal to or larger than the road link length, and each section can be configured to include a speed change prediction point. Therefore, the first route need not be divided more than necessary, and can be divided into sections in which the power consumption can be highly accurately estimated. In addition, the speed model is provided for each section including a speed change prediction point. Therefore, an event of a speed change such as acceleration or deceleration of the electric vehicle, which occurs at the point or in the section, can be reflected in the speed model. Since the power consumption is estimated based on the speed model in which the event of the speed change is reflected, it is possible to highly accurately estimate the power consumption of the electric vehicle during traveling on each section.

Using the power consumption highly accurately estimated as described above allows calculation of an accurate required supplemental power amount, and estimation of an accurate chargeable power amount. Moreover, an accurate planned charge amount can be calculated based on the accurate required supplemental power amount. Since the margin can be included in the planned charge amount, power for traveling to and from the charger is also ensured. Therefore, the charger search unit can search for a charger, based on the accurate chargeable power amount and planned charge amount. Therefore, the charger search unit can search for a charger, based on the accurate chargeable power amount and planned charge amount. This allows the electric vehicle to start searching for a charger from an appropriate traveling position. Since search for a charger can be started from an appropriate traveling position, the range of options in selecting a charger is wide, and the possibility of finding a quick charger can be increased. This allows the electric vehicle to arrive at the second point without causing a power shortage, and suppresses the battery charging time to a time as short as possible.

(2) In the above (1), the charger search device may further include an allowable power supply amount acquisition unit configured to acquire an allowable power supply amount that is an amount of power allowed to be supplied from the battery to a power supply target after the electric vehicle has arrived at the second point, and the planned charge amount calculation unit may calculate the planned charge amount, based on the required supplemental power amount, the margin, and the allowable power supply amount.

According to this configuration, search for a charger can be performed with the allowable power supply amount being included in the planned charge amount. Therefore, the electric vehicle can search for a charger such that the allowable amount of power can be supplied to the power supply target after arrival at the second point.

(3) In the above (1) and (2), the charger search unit may search for the charger when the planned charge amount exceeds 0.

According to this configuration, the charger search unit can search for a charger only when charging is required. Therefore, unnecessary search for chargers can be avoided.

(4) In any of the above (1) to (3), the charger search unit may search for the charger, based on a second route on which the electric vehicle is planned to travel. The second route ranges from the speed change prediction point at which the chargeable power amount becomes equal to or larger than the planned charge amount, to the second point.

After the speed change prediction point where the chargeable power amount exceeds the planned charge amount, it is possible to charge the battery with the planned charge amount. By searching for a charger along the second route from the point where the battery can be charged, the search for a charger can be started at an early stage. Therefore, the range of options in selecting a charger is wide, and the possibility of finding a quick charger can be increased. Thus, it is possible to suppress the battery charging time to a time as short as possible.

(5) In the above (4), the charger search unit may search for the charger capable of charging the battery from among chargers located within a predetermined distance from the second route.

Even if no charger exists on the second route, since the margin is included in the planned charge amount, a charger located within the predetermined distance from the second route can be searched for. Thus, the range of options in selecting a charger can be increased.

(6) In any of the above (1) to (5), the charger search device may further include a charger selection unit configured to, assuming that chargers having been found by the charger search unit are candidates for the charger for charging the battery, calculate, for each candidate, a total time of a loss time due to the electric vehicle passing through the position of the candidate, and a charging time for the planned charge amount to the battery at the candidate, and select a candidate having the shortest total time, as the charger for charging the battery.

According to this configuration, among the chargers found by the charger search unit, a charger that takes the shortest time for charging can be selected as a charger for charging the battery. Thus, the time until reaching the second point can be minimized. For example, at a location where supply of electricity is desired, such as a disaster-stricken area, it is possible to supply electric power on a specified time.

(7) In the above (6), the charger selection unit may calculate the loss time, based on at least one of: information on traffic jams on a travel route to the position of the candidate; and information on regulations that regulate traveling on the travel route.

The loss time can be accurately calculated by taking into consideration information on various types of specific regulations.

(8) In any of the above (1) to (7), the charger search unit may search for the charger, based on business hours of a charging station where the charger is installed.

According to this configuration, chargers installed at charging stations that are open for business can be searched for. Therefore, it is possible to search for available chargers.

(9) In any of the above (1) to (8), the chargeable power amount estimation unit may estimate: a quickly chargeable power amount that is the chargeable power amount in a case where the battery is charged using a quick charger; and a normally chargeable power amount that is the chargeable power amount in a case where the battery is charged using a normal charger, and the charger search unit may search for the quick charger capable of charging the battery, based on the quickly chargeable power amount and the planned charge amount, and search for the normal charger capable of charging the battery, based on the normally chargeable power amount and the planned charge amount.

In contrast to the normal charger, the quick charger is controlled so as not to fully charge the battery. Therefore, the quickly chargeable power amount is different from the normally chargeable power amount even at the same speed change prediction point. According to the above configuration, an accurate chargeable power amount can be estimated according to the type of the charger. This allows the electric vehicle to start searching for a charger from an appropriate traveling position for each of the quick charger and the normal charger.

(10) In the above (9), the charger search unit may search for the quick charger in preference to the normal charger.

The charging time of the quick charger is overwhelmingly shorter than that of the normal charger. According to the above configuration, when a quick charger has been successfully found, it is possible to cancel the search for a normal charger. Therefore, it is possible to efficiently search for a charger.

(11) A charger search method according to another embodiment of the present disclosure includes: acquiring a first route that is composed of a road link on which an electric vehicle equipped with a battery is planned to travel from a first point to a second point; dividing the first route into one or more sections, each section including a speed change prediction point at which a change in a travel speed of the electric vehicle is expected, each section being composed of one or a plurality of road links; acquiring a speed model for each section, the speed model indicating a temporal transition of the travel speed of the electric vehicle; estimating, based on the speed model acquired for each section, power consumption in a case where the electric vehicle travels on the section; calculating a required supplemental power amount that is an amount of power expected to be insufficient when the electric vehicle travels on the first route, based on an amount of remaining power of the battery at the first point, and the power consumption; estimating, based on the power consumption, a chargeable power amount to the battery at a time point when the electric vehicle passes through the speed change prediction point on the first route; calculating a planned charge amount to the battery, based on the required supplemental power amount and a margin of a predetermined power amount; and searching for a charger capable of charging the battery, based on the chargeable power amount and the planned charge amount.

This configuration includes, as steps, the characteristic processes in the charger search device. Therefore, according to this configuration, functions and effects similar to those of the charger search device can be exhibited.

(12) A computer program according to another aspect of the present disclosure causes a computer to function as: a route acquisition unit configured to acquire a first route that is composed of a road link on which an electric vehicle equipped with a battery is planned to travel from a first point to a second point; a route division unit configured to divide the first route into one or more sections, each section including a speed change prediction point at which a change in a travel speed of the electric vehicle is expected, each section being composed of one or a plurality of road links; a speed model acquisition unit configured to acquire a speed model for each section, the speed model indicating a temporal transition of the travel speed of the electric vehicle; a power consumption estimation unit configured to estimate, based on the speed model acquired for each section, power consumption in a case where the electric vehicle travels on the section; a required supplemental power amount calculation unit configured to calculate a required supplemental power amount that is an amount of power expected to be insufficient when the electric vehicle travels on the first route, based on an amount of remaining power of the battery at the first point, and the power consumption; a chargeable power amount estimation unit configured to estimate, based on the power consumption, a chargeable power amount to the battery at a time point when the electric vehicle passes through the speed change prediction point on the first route; a planned charge amount calculation unit configured to calculate a planned charge amount to the battery, based on the required supplemental power amount and a margin of a predetermined power amount; and a charger search unit configured to search for a charger capable of charging the battery, based on the chargeable power amount and the planned charge amount.

According to this configuration, the computer can be caused to function as the charger search device. Therefore, functions and effects similar to those of the charger search device can be exhibited.

[Detailed description of embodiment of the present disclosure]

Hereinafter, an embodiment of the present disclosure will be described with reference to the drawings. The embodiment described below is a specific example of the present disclosure. The numerical values, shapes, materials, components, arrangement positions and connection forms of components, steps, order of steps, and the like shown in the embodiment below are merely examples, and do not limit the present disclosure. In addition, among the components in the embodiment below, components that are not described in the independent claims are optionally includable components. Each drawing is a schematic drawing, and is not necessarily exact.

The same components are denoted by the same reference signs. Since those components have similar functions and names, descriptions thereof are omitted as appropriate.

<Embodiment 1>

[Overall configuration of charger search system]

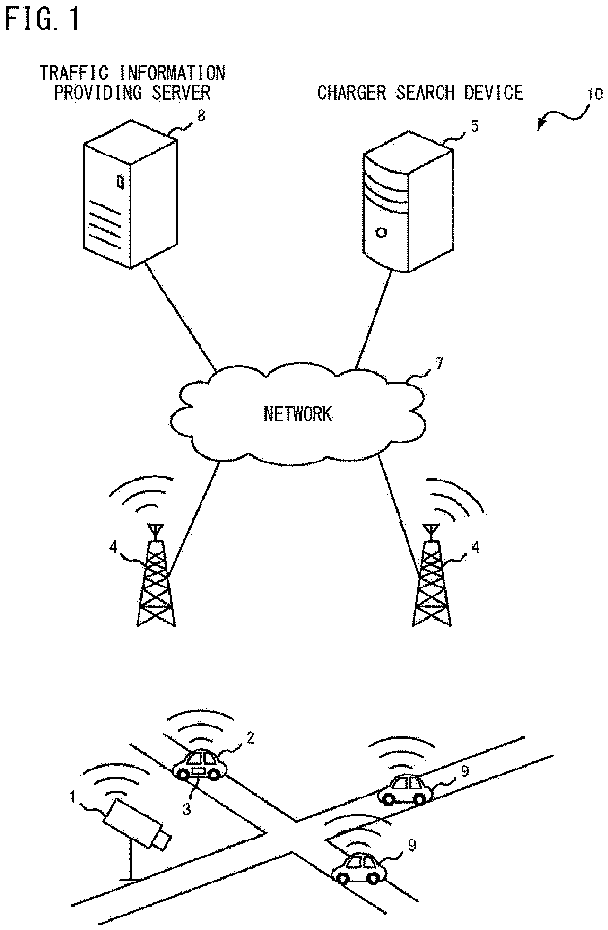

FIG. 1 shows an overall configuration of a charger search system according to an embodiment of the present disclosure.

A charger search system 10 according to the present embodiment is a system that searches for a charger for charging a battery mounted on an electric vehicle while the electric vehicle is traveling on a predetermined route. The charger search system 10 includes a detector 1, a target vehicle 2, probe vehicles 9, base stations 4, a charger search device 5, and a traffic information providing server 8.

The detector 1 has a wireless communication function, and is configured to include various sensors such as an image-type vehicle sensor installed on a road or a LiDAR (Light Detection and Ranging, or Laser Imaging Detection and Ranging).

The target vehicle 2 is an electric vehicle that travels by driving an electric motor using power supplied from a battery, and is a vehicle for which the charger search device 5 searches for a charger.

The target vehicle 2 includes an in-vehicle device 3 having a wireless communication function. The detailed configuration of the in-vehicle device 3 will be described later.

The probe vehicle 9 is a vehicle having a wireless communication function, and has a function of transmitting probe information including information on the position thereof, and information on the time when the probe vehicle 9 passed the position.

Examples of the target vehicle 2 and the probe vehicle 9 include not only ordinary passenger cars but also public vehicles such as route buses and emergency vehicles. The target vehicle 2 and the probe vehicle 9 are not limited to four-wheeled vehicles, and may be two-wheeled vehicles (motorcycles).

The base station 4 connects devices that perform wireless communication (detector 1, target vehicle 2, probe vehicle 9, etc.) and a network 7.

The base station 4 and a relay device (not shown) such as a repeater are each implemented as, for example, a transport device capable of providing SDN (Software-Defined Networking). The network virtualization technology represented by the above SDN is the basic concept of 5G (5th-generation mobile communication system). Therefore, the wireless communication system of the present embodiment is implemented as 5G, for example. However, the wireless communication system is not limited to 5G, and may be an ITS (Intelligent Transport Systems) wireless communication system or the like.

The charger search device 5 estimates travel energy (power consumption) of the target vehicle 2 during traveling on a predetermined route, based on a speed model representing an estimated travel speed of the target vehicle 2. Based on the estimated travel energy, the charger search device 5 searches for a charger for charging the battery mounted on the target vehicle 2 while the target vehicle 2 is traveling on the predetermined route. The charger search device 5 transmits a charger search result to the target vehicle 2 via the network 7 and the base station 4. The detailed configuration of the charger search device 5 will be described later.

The traffic information providing server 8 is a server installed in a traffic control center or the like, and calculates a typical travel speed of the probe vehicle 9, based on probe information of the probe vehicle 9 traveling on the route (road). In addition, the traffic information providing server 8 detects traffic accidents, etc., that occur on the route, based on detection information of the detector 1. The detailed configuration of the traffic information providing server 8 will be described later.

[Configuration of traffic information providing server 8]

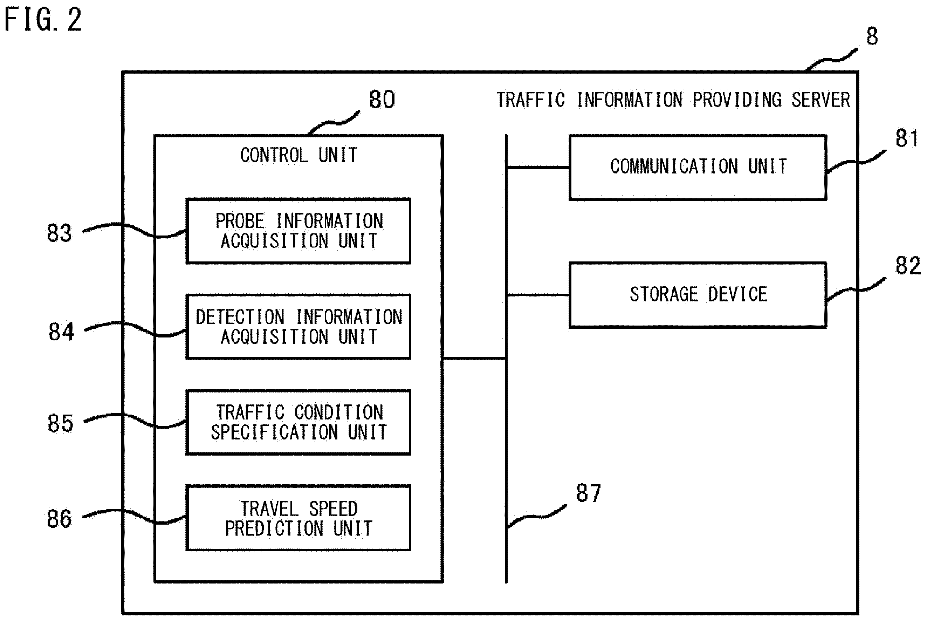

FIG. 2 is a block diagram showing an example of the configuration of the traffic information providing server 8 according to the embodiment of the present disclosure.

As shown in FIG. 2, the traffic information providing server 8 includes a control unit 80 including a CPU (Central Processing Unit) and the like, a communication unit 81, and a storage device 82. The control unit 80, the communication unit 81, and the storage device 82 are connected to each other via a bus 87.

The communication unit 81 includes a communication module for performing communication with the other devices via the network 7. The communication unit 81 transmits information given from the control unit 80 to another device via the network 7, and provides the control unit 80 with information received via the network 7.

The storage device 82 is implemented as a volatile memory element such as an SRAM (Static RAM) or a DRAM (Dynamic RAM), a non-volatile memory element such as a flash memory or an EEPROM (Electrically Erasable Programmable Read Only Memory), a magnetic storage device such as a hard disk, or the like. The storage device 82 stores therein computer programs to be executed in the control unit 80, data generated during execution of the computer programs in the control unit 80, and the like.

The control unit 80 includes a probe information acquisition unit 83, a detection information acquisition unit 84, a traffic condition specification unit 85, and a travel speed prediction unit 86, as functional processing units that are realized by reading out the computer programs stored in the storage device 82 in advance, and executing the programs.

The probe information acquisition unit 83 acquires probe information from a plurality of probe vehicles 9 via the communication unit 81. The probe information acquisition unit 83 writes the acquired probe information into the storage device 82.

The detection information acquisition unit 84 acquires detection information from the detector 1 via the communication unit 81. The detection information acquisition unit 84 acquires detection information indicating, for example, the speed, presence/absence, position, etc., of a vehicle detected by the detector 1. The detection information acquisition unit 84 writes the acquired detection information into the storage device 82.

The traffic condition specification unit 85 acquires route information from a departure point to an arrival point of the target vehicle 2, from the charger search device 5 via the communication unit 81. In addition, the traffic condition specification unit 85 reads out the detection information from the storage device 82. Based on the route information and the detection information, the traffic condition specification unit 85 specifies traffic conditions on and near the route indicated by the route information. Specifically, the traffic condition specification unit 85 detects a traffic accident that has occurred on and near the route, and specifies the details of the traffic accident including the location, range, and severity of the traffic accident. The traffic condition specification unit 85 can detect a traffic accident by using, for example, image processing or the like.

In addition to a traffic accident, the traffic condition specification unit 85 may specify details of a traffic jam including the location, range, and degree of the traffic jam, or may detect a location where a sudden deceleration of a vehicle occurs. Moreover, the traffic condition specification unit 85 may detect the location of a fallen object, a rockfall, etc.

The traffic condition specification unit 85 may detect them by using not only the detection information but also the probe information.

The traffic condition specification unit 85 reads out: details of traffic signals, including cycles and offsets, installed at intersections, etc., on and near the route; the shape of each road (e.g., gradient, curvature of a curve, etc.); and traffic rules such as the speed limit on each road, from the storage device 82 in which these pieces of information are stored in advance, or acquires these pieces of information from an external server. The details of traffic signals include information indicating a set of a plurality of traffic signals between which offsets of signal light indication are synchronized. The details of traffic signals may include information indicating a set of a plurality of traffic signals between which cycles of signal light indication are synchronized.

The traffic condition specification unit 85 creates traffic condition information indicating details of traffic accidents, details of traffic jams, sudden deceleration occurrence positions, positions of fallen objects, positions of fallen rocks, details of traffic signals, road shapes, and traffic rules, on and near the route. The traffic condition information is an example of regulation information that regulates traveling of the target vehicle 2 on the route.

The traffic condition specification unit 85 may include, in the traffic condition information, information on an event such as a concert held near the route indicated by the route information, weather information on an area including the route, information on route travel time, etc. The traffic condition specification unit 85 may acquire the event information and the weather information from an external server. The travel time information is calculated by the travel speed prediction unit 86 described later.

The traffic condition specification unit 85 transmits the created traffic condition information to the charger search device 5 via the communication unit 81.

The travel speed prediction unit 86 reads out the probe information acquired by the probe information acquisition unit 83 from the storage device 82, and predicts a typical travel speed of vehicles, based on the read probe information. The travel speed is calculated in units of road sections (e.g., road links) set in advance. For example, the travel speed prediction unit 86 calculates a travel time in each road section for each vehicle, based on the probe information, and calculates a travel speed of the vehicle in each road section, based on the travel time and the road section length. The travel speed prediction unit 86 subjects the travel speeds of a plurality of vehicles to a statistical process (e.g., calculation of an average value or a mode value of travel speeds), thereby calculating a typical travel speed of the vehicles in each road section. Road links on a road map may be regarded as road sections. A road section may be set for each section of a predetermined distance on the road. The travel speed prediction unit 86 may determine the legal speed limit as the typical travel speed for each road section. For example, if a travel speed cannot be obtained by the statistical process on a road link having little traffic, the travel speed prediction unit 86 may predict the legal speed limit as the typical travel speed.

The travel speed prediction unit 86 acquires route information from the departure point to the arrival point of the target vehicle 2, from the charger search device 5 via the communication unit 81, and determines a typical travel speed of vehicles for each road section in the route indicated by the route information, as a predicted travel speed of the target vehicle 2 during traveling on the route. The travel speed prediction unit 86 transmits speed information indicating the determined predicted travel speed of the target vehicle 2 for each road section, to the charger search device 5 via the communication unit 81.

[Configuration of in-vehicle device 3]

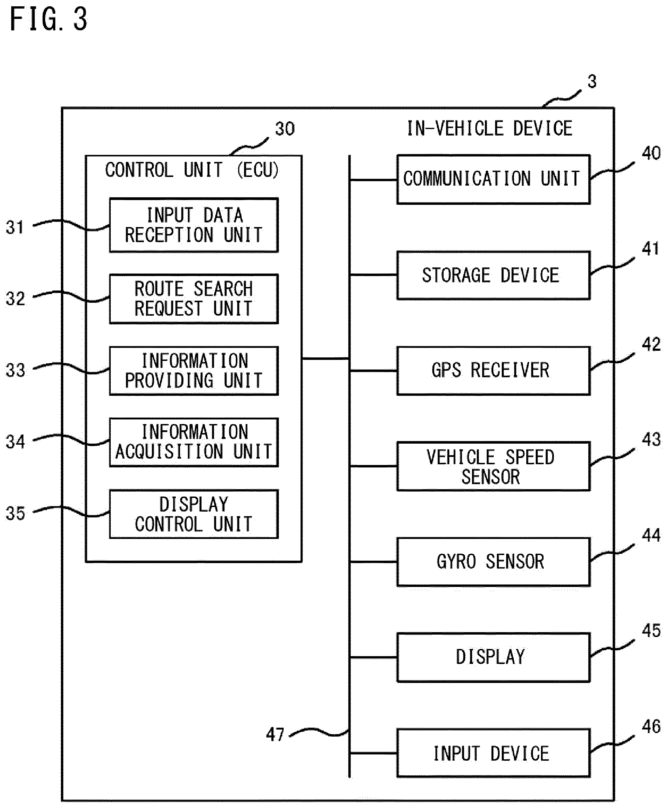

FIG. 3 is a block diagram showing an example of the configuration of the in-vehicle device 3 according to the present disclosure.

As shown in FIG. 3, the in-vehicle device 3 of the target vehicle 2 includes a control unit (ECU: Electronic Control Unit) 30, a communication unit 40, a storage device 41, a GPS (Global Positioning System) receiver 42, a vehicle speed sensor 43, a gyro sensor 44, a display 45, and an input device 46. These components are connected to each other through a bus 47. The bus 47 is implemented as, for example, an in-vehicle communication network such as CAN (Controller Area Network) or Ethernet (Registered Trademark).

The communication unit 40 is implemented as a wireless communication device capable of performing a 5G-supporting communication process. The communication unit 40 may be a wireless communication device already installed in the target vehicle 2, or may be a portable terminal such as a smartphone carried by an occupant in the target vehicle 2.

The storage device 41 is implemented as a volatile memory element such as an SRAM or a DRAM, a non-volatile memory element such as a flash memory or an EEPROM, a magnetic storage device such as a hard disk, or the like. The storage device 41 stores therein computer programs to be executed in the control unit 30, data generated during execution of the computer programs in the control unit 30, and the like. The storage device 41 further stores therein a map database. The map database includes road map data.

The GPS receiver 42, the vehicle speed sensor 43, and the gyro sensor 44 are sensors that measure the present position, speed, and orientation of the target vehicle 2.

The display 45 is an output device for notifying the user, who is the occupant of the in-vehicle device 3, of various types of information generated by the control unit 30. Specifically, the display 45 displays an input screen to be used in route search, a map image around the vehicle 2, route information from the departure point to the arrival point, information on a charger that charges the battery mounted on the target vehicle 2, travel energy information, and the like.

The input device 46 is a device with which the occupant of the target vehicle 2 performs various input operations. The input device 46 is composed of an operation switch and a joystick provided at the steering wheel, a touch panel provided at the display 45, and the like.

The control unit 30 includes an input data reception unit 31, a route search request unit 32, an information providing unit 33, an information acquisition unit 34, and a display control unit 35 as functional processing units that are realized by executing the computer programs stored in the storage device 41.

The input data reception unit 31 receives various kinds of input data. The input data includes information indicating, for example, the departure point and arrival point of the target vehicle 2, the number of occupants of the target vehicle 2, and the load capacity of the target vehicle 2 which are inputted by the occupant of the target vehicle 2 through the input device 46.

Moreover, the input data includes information on the driver of the target vehicle 2. The occupant of the target vehicle 2 may input the driver information by using the input device 46. The driver information may be associated with identification information of a smart key, and the input data reception unit 31 may acquire the driver information based on the identification information received from the smart key. The driver information may be identification information for identifying the driver, or may be information on the attributes of the driver (gender, age, driving proficiency, etc.).

The input data includes an allowable power supply amount that is the amount of power allowed to be supplied from the battery of the target vehicle 2 to a power supply target after the target vehicle 2 has arrived at the arrival point. The power supply target may be, for example, a power system at the arrival point, or may be a load device that consumes power. Alternatively, the power supply target may be a power storage facility that can be charged with power. The arrival point may be somewhat deviated from the point where the target vehicle 2 supplies power to the power supply target.

The route search request unit 32 transmits a route search request to the charger search device 5 via the communication unit 40. The route search request includes information on the departure point and the arrival point of the target vehicle 2 received by the input data reception unit 31.

The information providing unit 33 transmits the information on the number of occupants of the target vehicle 2, the information on the load capacity, and the driver information which are received by the input data reception unit 31, and the identification information of the target vehicle 2 (e.g., vehicle identification number, vehicle registration number, etc.) to the charger search device 5 via the communication unit 40.

The information providing unit 33 further transmits remaining power information indicating the amount of remaining power of the battery mounted on the target vehicle 2 at the departure point, to the charger search device 5 via the communication unit 40.

The information providing unit 33 further transmits allowable power supply amount information indicating the allowable power supply amount of the target vehicle 2 received by the input data reception unit 31, to the charger search device 5 via the communication unit 40.

The information acquisition unit 34 acquires, from the charger search device 5 via the communication unit 40, route information indicating the travel route of the target vehicle 2 from the departure point to the arrival point, which is calculated in response to the route search request transmitted from the route search request unit 32 to the charger search device 5. In addition, the information acquisition unit 34 acquires, from the charger search device 5 via the communication unit 40, information on a charger that performs charging when the target vehicle 2 travels on the travel route. The information acquisition unit 34 may acquire, from the charger search device 5 via the communication unit 40, information on travel energy to be consumed when the target vehicle 2 travels on the travel route.

The display control unit 35 causes the display 45 to display the route information and information on the charger acquired by the information acquisition unit 34. The display control unit 35 may cause the display 45 to display information on the travel energy.

[Configuration of charger search device 5]

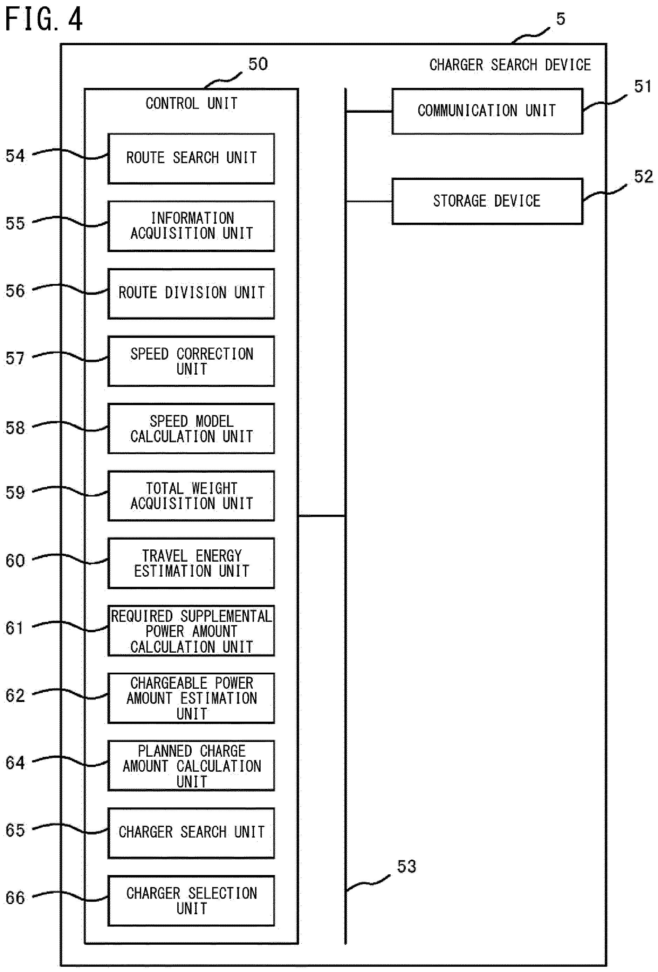

FIG. 4 is a block diagram showing an example of the configuration of the charger search device 5 according to the embodiment of the present disclosure.

As shown in FIG. 4, the charger search device 5 includes a control unit 50 including a CPU, etc., a communication unit 51, and a storage device 52. The control unit 50, the communication unit 51, and the storage device 52 are connected to each other via a bus 53.

The communication unit 51 includes a communication module for performing communication with the other devices via the network 7. The communication unit 51 transmits information given from the control unit 50 to another device via the network 7, and provides the control unit 50 with information received via the network 7.

The storage device 52 is implemented as a volatile memory element such as an SRAM or a DRAM, a non-volatile memory element such as a flash memory or an EEPROM, a magnetic storage device such as a hard disk, or the like. The storage device 52 stores therein computer programs to be executed in the control unit 50, data generated during execution of the computer programs in the control unit 50, and the like. Furthermore, the storage device 52 stores therein a vehicle type information table that is a data table showing the correspondence between vehicle identification information and vehicle type information. Moreover, the storage device 52 stores therein a specific information table that is a data table indicating the correspondence between the vehicle type information and vehicle-specific information (e.g., the weight of the vehicle, air resistance coefficient of the vehicle, power consumption of a DC/DC converter connected to the battery of the vehicle, etc.). The storage device 52 also stores therein an air density table that is a data table indicating the correspondence between air temperature and air density.

The storage device 52 also stores therein a map database. The map database includes road map data. The map database includes information on the gradient of each road, and information indicating a rolling resistance coefficient of the road surface. The map database also includes information indicating the type of road (local road, expressway) for each road. The map database also includes, for each of guide points being points on the road (described later), information indicating a heading direction and presence/absence of a traffic signal at the guide point.

Furthermore, the map database includes position information of charging stations, and information on the types and the numbers of chargers installed in the charging stations. Here, a charging station is an example of a charging facility where the user can receive a charging service for the target vehicle 2 by paying a fee. The types of chargers include a quick charger and a normal charger. The quick charger is a charger capable of quickly charging a battery with a DC current. The quick charger is capable of charging at a charging speed of 30 kW/h or higher, for example. On the other hand, the normal charger is a charger capable of charging a battery with an AC current. The normal charger is a charger capable of charging at a charging speed lower than that of the quick charger, for example, a charging speed of 10 kW/h or lower. However, although the normal charger can perform charging until the SOC (State Of Charge) reaches 100%, the quick charger can perform charging only until the SOC reaches a predetermined value (e.g., 80%) less than 100%. After the SOC has exceeded the predetermined value, the quick charger can reduce the charging speed and continue charging until the SOC reaches 100%. The quick charger can perform charging in a shorter time than the normal charger, but currently, the installation number of quick chargers is less than that of the normal charger.

The control unit 50 includes a route search unit 54, an information acquisition unit 55, a route division unit 56, a speed correction unit 57, a speed model calculation unit 58, a total weight acquisition unit 59, a travel energy estimation unit 60, a required supplemental power amount calculation unit 61, a chargeable power amount estimation unit 62, a planned charge amount calculation unit 64, a charger search unit 65, and a charger selection unit 66, as functional processing units that are realized by reading out the computer programs stored in the storage device 52 in advance, and executing the programs.

The charger search device 5 has a function of a so-called car navigation system. The route search unit 54 receives a route search request from the in-vehicle device 3 of the target vehicle 2 via the communication unit 51. Upon receiving the route search request, the route search unit 54 searches for a travel route from the departure point to the arrival point of the target vehicle 2. A known method can be used as the route search method. For example, the route search unit 54 searches for a travel route having the minimum travel distance from the departure point to the arrival point. The route search unit 54 may search for a travel route having the minimum travel distance, based on each of a plurality of conditions (e.g., whether or not an expressway is used). The route search unit 54 may search for a travel route having the minimum travel time from the departure point to the arrival point. The route search unit 54 transmits route information indicating the searched travel route (hereinafter referred to as "searched route") to the target vehicle 2 and the traffic information providing server 8 via the communication unit 51. The searched route is configured as a set of one or more road links.

The information acquisition unit 55 acquires speed information indicating a predicted travel speed of the target vehicle 2 for each road section included in the searched route of the target vehicle 2, from the traffic information providing server 8 via the communication unit 51.

In addition, the information acquisition unit 55 acquires traffic condition information in the searched route of the target vehicle 2, from the traffic information providing server 8 via the communication unit 51.

Moreover, the information acquisition unit 55 acquires the information on the number of occupants of the target vehicle 2, the information on the load capacity of the target vehicle 2, the identification information of the target vehicle 2, the driver information of the target vehicle 2, the remaining power information of the target vehicle 2, and the allowable power supply information of the target vehicle 2, from the in-vehicle device 3 of the target vehicle 2 via the communication unit 51.

Based on a point, at which a change in the travel speed of the target vehicle 2 is predicted (hereinafter referred to as "speed change prediction point"), provided on the travel route of the target vehicle 2 searched by the route search unit 54, the route division unit 56 divides the travel route into one or more sections each being composed of one or a plurality of road links, and each including a speed change prediction point. A section including a speed change prediction point is a section delimited by the speed change point. The travel speed changes not only at a speed change prediction point but also in a section before or after a speed change prediction point.

On the upstream side of a speed change prediction point, a car navigation system generally outputs a guidance message by voice, and therefore, this point is referred to as "guide point". That is, in the present disclosure, the "guide point" indicates a target point at which a route guidance system such as a car navigation system notifies the driver of the target vehicle 2 of a route guidance and/or a driving operation guidance.

A guide point is generated when the route search unit 54 searches for a route. For example, based on intersection type information indicating presence/absence of a traffic signal at an intersection, the type of the traffic signal, etc., the route search unit 54 determines whether or not an intersection satisfying a predetermined condition (e.g., an intersection where a specific type of traffic signal at which stop by signal light often occurs is installed) is provided at an end point of a road link (hereinafter referred to as "link end point") on the searched route, and sets the link end point where the intersection satisfying the condition is provided, as a guide point. The route search unit 54 may set, as a guide point, an intersection or any other points by using information other than the intersection type information. For example, the route search unit 54 may extract, as a guide point, a link end point where the road type changes on the searched route, based on road type information. The route search unit 54 may extract, as a guide point, a link end point where the target vehicle 2 changes the direction by an angle within a predetermined angle range, based on the map database. The route search unit 54 may set, as a guide point, a link end point where the number of lanes changes, a link end point where the legal speed limit changes, a link end point where the road gradient changes, a link end point where a curve (particularly, a sharp curve) occurs, a link end point where branching occurs, a link end point where merging occurs, or the like, based on the registered information such as the map database.

Such a guide point may be registered in advance in the map database that the route search unit 54 refers to when searching for a route, or may be dynamically generated based on the intersection type information, etc., as described above. Both a guide point registered in the map database and a dynamically generated guide point may be used as the guide point.

A section between a guide point and another guide point located adjacent to and on the downstream side of the guide point is referred to as "guide section". Of the two guide points forming the guide section, the guide point on the upstream side is referred to as "upstream guide point", and the guide point on the downstream side is referred to as "downstream guide point".

The guide point includes, for example, a point where a traffic signal is installed (hereinafter referred to as "traffic signal installation point") and a point where the target vehicle 2 turns right or left (hereinafter referred to as "right or left turn point"). Specifically, the right or left turn point refers to a point where the target vehicle 2 changes its direction by an angle within a predetermined angle range at a branching point or a point where the road type changes, or a point where the radius of curvature is equal to or less than a predetermined value. The guide point also includes: a change point from a road where no traffic signals are installed, such as an expressway, a limited highway, or a bypass road, to a local road where traffic signals are installed; and a junction point from a certain expressway to another expressway. The guide point also includes an entry point and an exit point of an expressway, and entry points and exit points of a rest area, a parking lot, an interchange, and a toll plaza. However, examples of the guide point are not limited thereto. The guide point may include a point where the number of lanes changes, a point where the legal speed limit changes, a point where the road gradient changes, a point where roads merge or diverge, a point where the target vehicle 2 changes its direction by an angle within a certain angle range on a single road, and a curve point where the radius of curvature is equal to or less than a predetermined value.

A guide section is composed of one or a plurality of road links. However, the positions of the end points (guide points) of a guide section and the positions of link end points need not be exactly the same. Since it is conceivable that the guide section is substantially composed of one or a plurality of road links, some positional displacement is allowed.

That is, the route division unit 56 divides the travel route into guide sections each being composed of one or a plurality of road links.

The speed correction unit 57 corrects the predicted travel speed indicated by the speed information, based on the speed information and the traffic condition information acquired by the information acquisition unit 55.

For example, if the speed information indicates a typical travel speed for each road link, the speed correction unit 57 calculates a typical travel speed for each guide section, based on the typical travel speed for each road link.

If a single guide section is composed of a single road link, the speed correction unit 57 sets the typical travel speed of the road link as the typical travel speed of the guide section. If a single guide section is composed of a plurality of road links, the speed correction unit 57 calculates a typical travel speed of the guide section, based on the typical travel speeds of the plurality of road links. For example, an average of the typical travel speeds of the plurality of road links may be calculated as the typical travel speed of the guide section. The average may be a weighted average depending on the lengths of the road links.

Next, the speed correction unit 57 corrects the typical travel speed for each guide section, based on the traffic condition information. For example, if a traffic accident occurs in a guide section and the number of vehicle-travelable lanes is restricted, the speed correction unit 57 corrects the typical travel speed by reducing the typical travel speed of the guide section according to a predetermined rule (e.g., multiplying by a constant of 1 or less). If rain is forecasted in the guide section at the time when the target vehicle 2 is planned to travel, the speed correction unit 57 may similarly correct the typical travel speed. If an event is scheduled to be held in the vicinity of the guide section during a predetermined time period including the planned travel time of the target vehicle 2 or if a traffic jam occurs in the guide section, the speed correction unit 57 may similarly correct the typical travel speed. If the travel time in the guide section is longer than usual, the speed correction unit 57 may similarly correct the typical travel speed. If a guide section includes a steep gradient or curve, the speed correction unit 57 may similarly correct the typical travel speed according to the map database stored in the storage device 52.

The speed model calculation unit 58 calculates, for each guide section including each of the plurality of guide points provided on the searched route, a speed model indicating a temporal transition of the predicted travel speed of the target vehicle 2 in the guide section. Hereinafter, a method for calculating a speed model will be specifically described for each type of guide section.

(Right or left turn model)

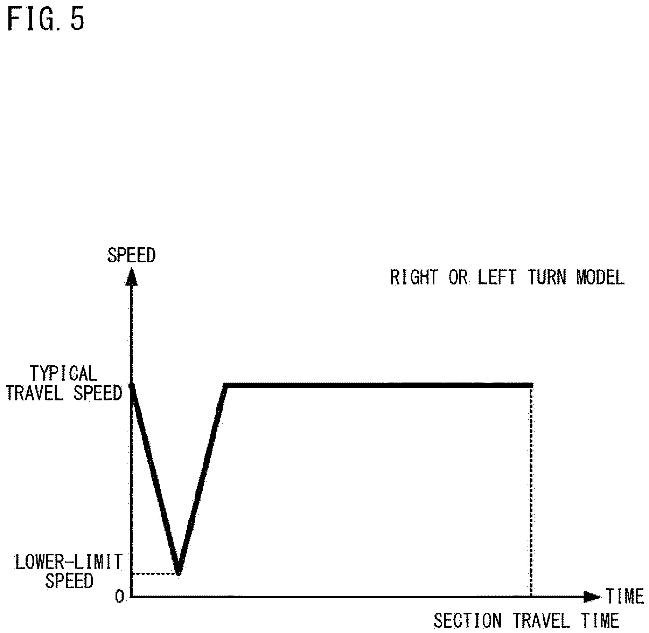

FIG. 5 shows an example of a speed model in a guide section in which an upstream guide point is a right or left turn point. In FIG. 5, the horizontal axis represents time, and the vertical axis represents speed. Specifically, the speed model calculation unit 58 decreases the speed from a predetermined speed (e.g., the typical travel speed) in the guide section to a predetermined speed (predetermined lower-limit speed) at a predetermined first acceleration, increases the speed from the lower-limit speed to the predetermined speed (e.g., the typical travel speed) at a predetermined second acceleration, and maintains the typical travel speed until reaching the downstream guide point, thereby creating a speed model indicating the aforementioned temporal transition of the speed. This speed model is referred to as "right or left turn model".

(Signal stop model)

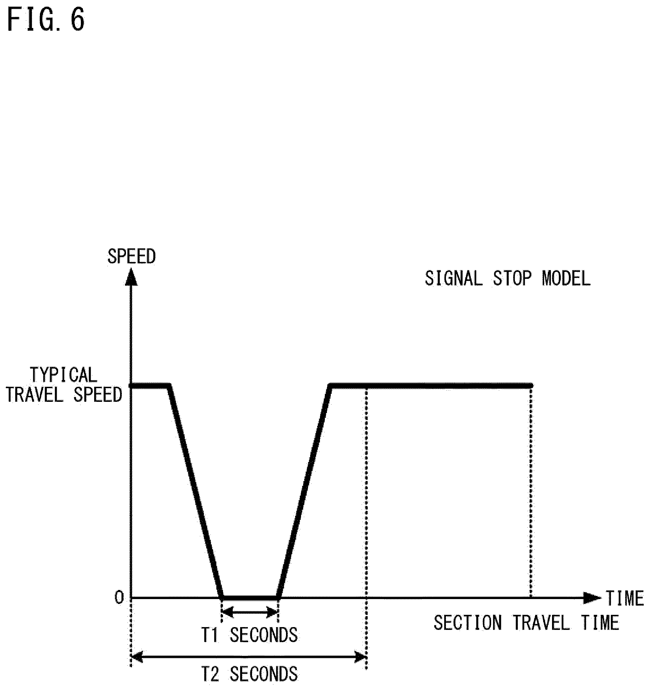

FIG. 6 shows an example of a speed model of a guide section in which an upstream guide point is a traffic signal installation point. In FIG. 6, the horizontal axis represents time, and the vertical axis represents speed. Specifically, the speed model calculation unit 58 assumes that a stop time due to a red light is T1 seconds. In addition, the speed model calculation unit 58 assumes that the time required for a vehicle to pass through a traffic signal installation point is T2 seconds. The speed model calculation unit 58 decreases the speed from a predetermined speed (e.g., the typical travel speed) to a speed of 0 (stop) at a predetermined third acceleration, maintains the speed of 0 for T1 seconds, and thereafter increases the speed from the speed of 0 (stop) to a predetermined speed (e.g., the typical travel speed) at a predetermined fourth acceleration, and maintains the typical travel speed until reaching the downstream guide point, thereby creating a speed model indicating the aforementioned temporal transition of the speed. This speed model is referred to as "signal stop model".

(Dedicated section model (other than last model))

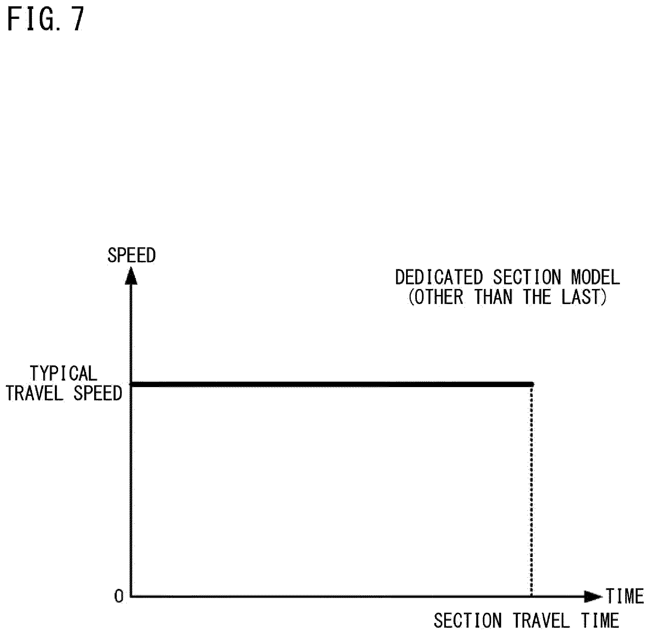

FIG. 7 shows an example of a speed model of a guide section in which an upstream guide point and a downstream guide point do not correspond to either a right or left turn point or a traffic signal installation point. In FIG. 7, the horizontal axis represents time, and the vertical axis represents speed. Specifically, the speed model calculation unit 58 creates a speed model indicating a temporal transition of the speed being maintained at a predetermined speed (e.g., the typical travel speed) throughout the guide section. This speed model is referred to as "dedicated section model (other than last model)". The dedicated section model (other than last model) is applied to, for example, a road section where no traffic signals are installed, such as an expressway, a limited highway, or a bypass road.

This speed model has no speed change in the guide section. However, a step occurs due to a difference between the speed at the downstream guide point of the guide section adjacent to and on the upstream side of the main guide section and the typical travel speed in the main guide section, whereby a speed change is expressed. Likewise, a step occurs due to a difference between the speed at the upstream guide point of the guide section adjacent to and on the downstream side of the main guide section and the typical travel speed in the main guide section, whereby a speed change is expressed. However, there may be a case where almost no speed change occurs before and after the guide point throughout the process.

(Dedicated section model (last model))

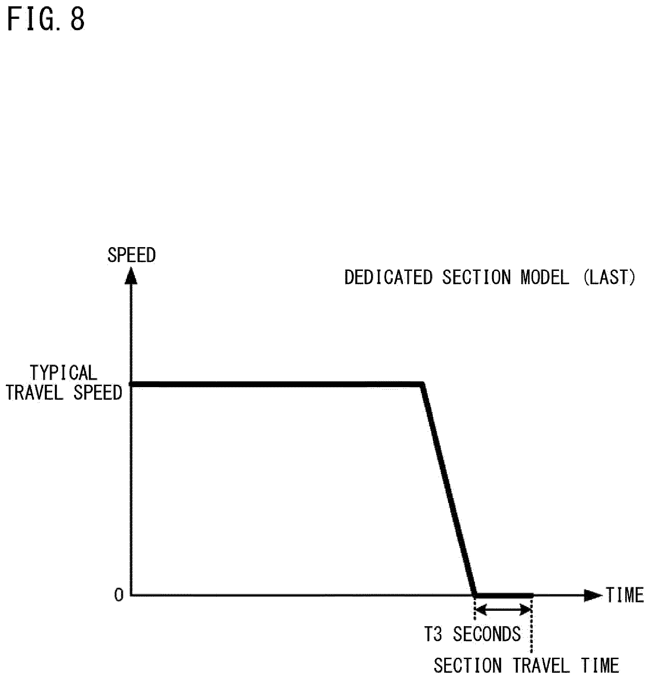

FIG. 8 shows an example of a speed model in which an upstream guide point does not correspond to either a right or left turn point or a traffic signal installation point, and the downstream guide point corresponds to a traffic signal installation point. In FIG. 8, the horizontal axis represents time, and the vertical axis represents speed. Specifically, the speed model calculation unit 58 maintains a predetermined speed (e.g., the typical travel speed) from the upstream guide point, decreases the speed from the typical travel speed to the speed of 0 (stop) at a predetermined fifth acceleration, and maintains the state of the speed of 0 (stop) for T3 seconds, thereby creating a speed model indicating the aforementioned temporal transition of the speed. This speed model is referred to as "dedicated section model (last model)". The dedicated section model (last model) is applied to, for example, a road section in which a road where no traffic signals are installed, such as an expressway, a limited highway, or a bypass road, changes to a local road where traffic signals are installed.

Before calculating the speed model, the speed model calculation unit 58 may determine an acceleration at which the speed of the target vehicle 2 is changed, based on the driver information of the target vehicle 2 acquired by the information acquisition unit 55. The speed model calculation unit 58 calculates the speed model, based on the determined acceleration. Specifically, based on the driver information, the speed model calculation unit 58 corrects the first acceleration and the second acceleration of the right or left turn model (FIG. 5), the third acceleration and the fourth acceleration of the signal stop model (FIG. 6), and the fifth acceleration of the dedicated section model (last model) (FIG. 7). For example, if the driver's attribute is male, 20s, or with high driving proficiency, the speed model calculation unit 58 may increase, i.e., correct, the absolute value of the acceleration by multiplying each of the first to fifth accelerations by a predetermined coefficient that is not less than 1. If the driver's attribute is female, 60s, or with low driving proficiency, the speed model calculation unit 58 may decrease, i.e., correct, the absolute value of the acceleration by multiplying each of the first to fifth accelerations by a predetermined positive coefficient that is less than 1.

If a coefficient table showing the correspondence between identification information of drivers and coefficients is stored in the storage device 52 in advance, the speed model calculation unit 58 may determine a coefficient corresponding to the identification information of the driver by referring to the coefficient table, and multiply each of the first to fifth accelerations by the determined coefficient to correct the acceleration.

The speed model calculation unit 58 may combine a plurality of models of the same type or different types for one guide section, thereby creating a speed model for this section.

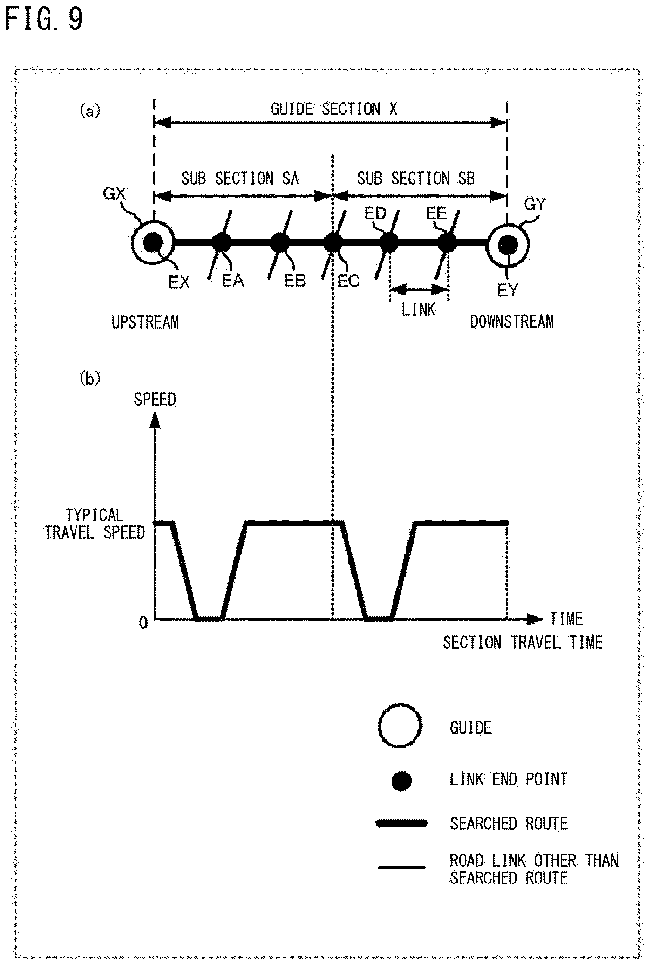

FIG. 9 illustrates an example of a procedure for creating a speed model for one guide section by combining a plurality of speed models. In FIG. 9, (a) shows the relationship between a guide section and road links, and shows an example in which a guide section is divided into a plurality of sub sections. In FIG. 9, (b) shows a created speed model.

As shown in (a) of FIG. 9, one guide section X includes link end points EX, EA, EB, EC, ED, EE, EY from the upstream side. The guide section X further includes an upstream guide point GX and a downstream guide point GY. The link end point EX is the upstream guide point GX, and the link end point EY is the downstream guide point GY. In (a) of FIG. 9, the link end points are represented by black circles, a searched route is represented by a thick solid line, and road links other than the searched route are represented by thin solid lines.

It is assumed that each of the upstream guide point GX (link end point EX) and the downstream guide point GY (link end point EY) is a traffic signal installation point. Each of the link end points EA, EB, EC, ED, EE is a point that is a traffic signal installation point but is not set as a guide point. For example, each of the link end points EA, EB, EC, ED, EE is an intersection that does not correspond to an intersection to be set as a guide point (e.g., an intersection at which a specific type of traffic signal is installed).

If the distance of the guide section X is larger than a predetermined distance threshold, the speed model calculation unit 58 divides the guide section X into sub sections. For example, the speed model calculation unit 58 divides the guide section X into an upstream sub section SA and a downstream sub section SB at the position of the link end point EC that is closest to a midpoint of the guide section X among the link end points EA, EB, EC, ED, EE. This process divides the guide section X into the sub sections SA and SB each having a distance equal to or less than the distance threshold.

As shown in (b) of FIG. 9, the speed model calculation unit 58 creates, for the guide section X, a speed model in which a plurality of (two in this case) speed models are combined. That is, the speed model calculation unit 58 creates a new speed model in which one speed model is applied to the sub section SA, and one speed model is applied to the sub section SB. Since the typical travel speed is calculated in units of guide sections, the speed model for the sub section SA and the speed model for the sub section SB have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

For example, by defining the speed model of one guide section by the speed models of a plurality of sub sections as described above, the traveling behavior of the target vehicle 2 can be expressed more accurately by a simple method. Thus, the travel energy can be highly accurately estimated.

If the distance of the sub section is larger than the distance threshold, the speed model calculation unit 58 may newly select a link end point at which the guide section X is divided into sub sections, and may divide the guide section X such that the distance of each of the finally generated sub sections becomes equal to or less than the distance threshold.

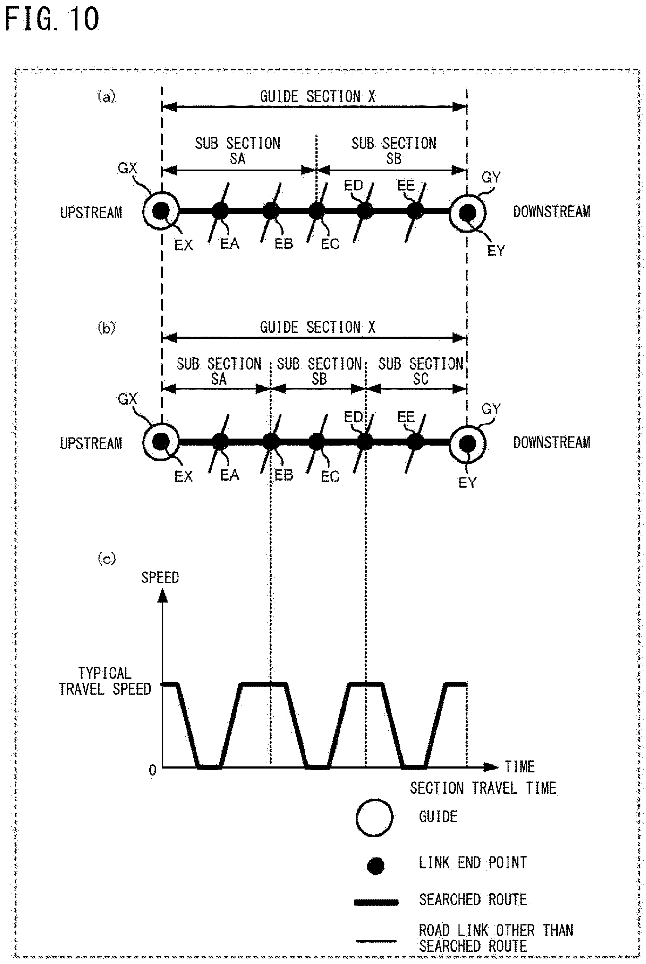

FIG. 10 illustrates an example of a procedure for creating a speed model for one guide section by combining a plurality of speed models. In FIG. 10, (a) shows the relationship between a guide section and road links, and shows an example in which a guide section is divided into a plurality of sub sections. In FIG. 10, (b) shows the relationship between a guide section and road links, and shows another example in which a guide section is divided into a plurality of sub sections. In FIG. 10, (c) shows a created speed model.

A guide section X, an upstream guide point GX, a downstream guide point GY, and link end points EX, EA, EB, EC, ED, EE, EY shown in (a) and (b) in FIG. 10 are identical to those shown in (a) of FIG. 9.

As shown in (a) of FIG. 10, if the section length of the guide section X is larger than a predetermined distance threshold, the speed model calculation unit 58 divides the guide section X into sub sections. For example, in a similar manner to that described with reference to (a) of FIG. 9, the speed model calculation unit 58 divides the guide section X into an upstream sub section SA and a downstream sub section SB at the position of the link end point EC that is closest to a midpoint of the guide section X among the link end points EA, EB, EC, ED, EE.

However, it is assumed that the section length of at least one of the sub section SA and the sub section SB is larger than the distance threshold. In this case, the speed model calculation unit 58 divides the guide section X into more sub sections.

For example, as shown in (b) of FIG. 10, the speed model calculation unit 58 changes the number of divisions of the guide section X from 2 to 3, and divides the guide section X into three sub sections SA, SB, SC. Specifically, the speed model calculation unit 58 selects, from among the link end points EA, EB, EC, ED, EE, link end points that are closest to two division points for dividing the guide section X into three sections such that the section lengths thereof have the same distance. Here, it is assumed that the link end points EB, ED are selected. The speed model calculation unit 58 divides the guide section X at the positions of the link end points EB, ED, thereby generating sub sections SA, SB, SC.

If the section length of at least one of the sub sections SA, SB, SC is larger than the distance threshold, the speed model calculation unit 58 increases the number of divisions of the guide section X one by one and repeats the aforementioned process until the section lengths of all the sub sections become equal to or less than the distance threshold. However, when a sub section whose section length is larger than the distance threshold is present even if the guide section X is divided at the positions of all the link end points EA, EB, EC, ED, EE, the speed model calculation unit 58 ends the process of dividing the guide section X, at that point in time.

Here, it is assumed that the section lengths of all the sub sections SA, SB, SC are equal to or less than the distance threshold. As shown in (c) of FIG. 10, the speed model calculation unit 58 creates, for the guide section X, a speed model in which a plurality of (three in this case) speed models are combined. That is, the speed model calculation unit 58 creates a new speed model in which one speed model is applied to the sub section SA, one speed model is applied to the sub section SB, and one speed model is applied to the sub section SC. Since the typical travel speed is calculated in units of guide sections, the speed models for the sub sections SA, SB, SC have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

In the example shown in FIG. 10, if the section length of a sub section is larger than the distance threshold, sub sections are newly set with the already created sub sections being ignored. However, if the section length of a sub section is larger than the distance threshold, sub sections may be newly set by utilizing the already created sub sections.

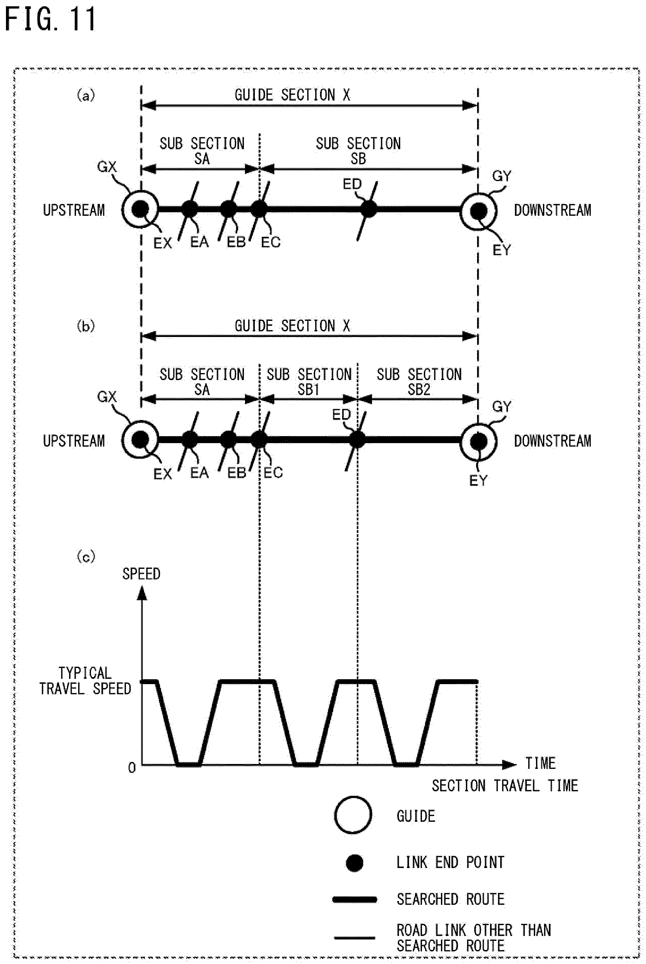

FIG. 11 illustrates an example of a procedure for creating a speed model for one guide section by combining a plurality of speed models. In FIG. 11, (a) shows the relationship between a guide section and road links, and shows an example in which a guide section is divided into a plurality of sub sections. In FIG. 11, (b) shows the relationship between a guide section and road links, and shows another example in which a guide section is divided into a plurality of sub sections. In FIG. 11, (c) shows a created speed model.

As shown in (a) of FIG. 11, one guide section X includes link end points EX, EA, EB, EC, ED, EY from the upstream side. The guide section X further includes an upstream guide point GX and a downstream guide point GY. The link end point EX is the upstream guide point GX, and the link end point EY is the downstream guide point GY. In (a) of FIG. 11, the link end points are represented by black circles, a searched route is represented by a thick solid line, and road links other than the searched route are represented by thin solid lines.

As shown in (a) of FIG. 11, if the section length of the guide section X is larger than a predetermined distance threshold, the speed model calculation unit 58 divides the guide section X into sub sections. For example, the speed model calculation unit 58 divides the guide section X into an upstream sub section SA and a downstream sub section SB at the position of the link end point EC that is closest to a midpoint of the guide section X among the link end points EA, EB, EC, ED.

Here, the section length of the sub section SA is equal to or less than the distance threshold. The section length of the sub section SB is larger than the distance threshold. In this case, the speed model calculation unit 58 determines the sub section SA as a sub section of the guide section X, and further divides the sub section SB into two sub sections. The only link end point at which the sub section SB can be divided is the link end point ED. Therefore, the speed model calculation unit 58 divides the sub section SB into a sub section SB1 and a sub section SB2 at the position of the link end point ED. If there are a plurality of link end points at which the sub section SB can be divided, the speed model calculation unit 58 may divide the sub section SB into the two sub sections at the position of a link end point closest to a midpoint of the sub section SB. Such a process is repeated until the section lengths of all the sub sections become equal to or less than the distance threshold. However, if no link end point is included in a sub section whose section length is larger than the distance threshold, the speed model calculation unit 58 ends the process of dividing this sub section, at that point in time.

Here, it is assumed that the section lengths of all the sub sections SA, SB 1, SB2 are equal to or less than the distance threshold. As shown in (c) of FIG. 11, the speed model calculation unit 58 creates, for the guide section X, a speed model in which a plurality of (three in this case) speed models are combined. That is, the speed model calculation unit 58 creates a new speed model in which one speed model is applied to the sub section SA, one speed model is applied to the sub section SB1, and one speed model is applied to the sub section SB2. Since the typical travel speed is calculated in units of guide sections, the speed models for the sub sections SA, SB1, SB2 have the same typical travel speed. However, in the case of combining speed models in units of sub sections, a typical travel speed may be calculated for each sub section. Thus, the travel energy can be estimated more accurately, compared to the case where the speed model of a guide section having a long distance is defined by one typical travel speed.

Referring back to FIG. 4, the total weight acquisition unit 59 calculates the total weight of the target vehicle 2, based on the information on the number of occupants of the target vehicle 2, the information on the load capacity, and the identification information that are acquired from the in-vehicle device 3 by the information acquisition unit 55. Specifically, the total weight acquisition unit 59 refers to the vehicle type information table stored in the storage device 52, and specifies the vehicle type information of the target vehicle 2 from the identification information of the target vehicle 2. In addition, with reference to the specific information table stored in the storage device 52, the total weight acquisition unit 59 specifies the vehicle weight of the target vehicle 2 from the specified vehicle type information of the target vehicle 2.

The total weight acquisition unit 59 estimates the weight of occupants from the information on the number of occupants of the target vehicle 2. For example, if two adults and two children are inputted as the number of occupants, (adult weight×2+child weight×2) is estimated as the weight of occupants. Here, the adult weight and the child weight are an average weight of adults and an average weight of children that are set in advance. The adult weight and the child weight may be determined in consideration of gender or age. In this case, the information on the number of occupants includes the gender or age of each occupant, and the weight of the occupants is estimated by using the adult weight or the child weight corresponding to the gender or age.

The total weight acquisition unit 59 calculates the total weight of the target vehicle 2 by adding the weight of the occupants of the target vehicle 2 and the load capacity of the target vehicle 2 indicated by the load capacity information, to the weight of the target vehicle 2.

The total weight acquisition unit 59 may acquire the total weight of the target vehicle 2 from an external server or the in-vehicle device 3.

The travel energy estimation unit 60 estimates travel energy (power consumption) of the target vehicle 2 when the target vehicle 2 travels on the searched route.

Specifically, the travel energy estimation unit 60 refers to the vehicle type information table, and specifies the vehicle type information of the target vehicle 2 from the identification information of the target vehicle 2 indicated by the route search request. **In** addition, the travel energy estimation unit 60 refers to the specific information table, and specifies the vehicle-specific information of the target vehicle 2 from the vehicle type information of the target vehicle 2. The specified vehicle-specific information will be described in detail later.

Based on the vehicle-specific information of the target vehicle 2, the speed model calculated by the speed model calculation unit 58, the total weight of the target vehicle 2 calculated by the total weight acquisition unit 59, and the traffic condition information acquired by the information acquisition unit 55, the travel energy estimation unit 60 calculates travel energy RE of the target vehicle 2 in the case where the target vehicle 2 travels on the route searched by the route search unit 54, according to the following formulae (1) to (5). Formulae (1) to (5) are merely examples. The travel energy estimation unit 60 may calculate the travel energy RE of the target vehicle 2 by using, instead of formulae (1) to (5), any formulae capable of calculating the travel energy RE of the target vehicle 2, based on the speed model calculated by the speed model calculation unit 58.

[Math. 1]

$$RE = \int_{ts}^{te} \{ \ (Fr + Fs + Fh + Fa) \ \times V \times \eta + Cp \} dt \qquad \cdots (式1)$$

$$Fr = g \times \mu \times W \quad \cdots (式2)$$

$$Fs = g \times W \times \sin\theta \quad \cdots (式3)$$

$$Fh = (1 + \alpha) \times W \times \frac{dV}{dt} \quad \cdots (式4)$$

$$Fa = \frac{1}{2} \times p \times Cd \times A \times V^2 \quad \cdots (式5)$$

Here, variables and constants are defined as follows.

RE: travel energy [Wh] from departure point to arrival point
ts: departure time at departure point (travel start time)
te: arrival time at arrival point (travel end time)
Fr: rolling resistance [N]
Fs: gradient resistance [N]
Fh: acceleration resistance [N]
Fa: air resistance [N]
V: vehicle speed [m/s]
$\eta$: system transmission efficiency [%]
Cp: DC/DC converter power consumption [W]
g: gravitational acceleration [m/s$^2$]
$\mu$: road surface rolling resistance coefficient
W: total weight of vehicle [kg]
$\theta$: gradient
p: air density [kg/m$^3$]
Cd: air resistance coefficient
A: frontal resistance area [m$^2$]
$\alpha$: inertial mass
dV/dt: vehicle acceleration [m/s$^2$]

The travel start time ts and the travel end time te are obtained from the route searched by the route search unit 54.

The vehicle speed V is the predicated travel speed indicated by the speed model created by the speed model calculation unit 58.

The total weight W of vehicle is the total weight of the target vehicle 2 calculated by the total weight acquisition unit 59.

The system transmission efficiency $\eta$, the DC/DC converter power consumption Cp, the air resistance coefficient Cd, the frontal resistance area A, and the inertial mass $\alpha$ are included in the vehicle-specific information of the target vehicle 2.

The gravitational acceleration g is a constant.

The travel energy estimation unit 60 specifies the gradient $\sin\theta$ and the rolling resistance coefficient $\mu$, based on the searched route, the traffic condition information, and the map database stored in the storage device 52.

The travel energy estimation unit 60 refers to the air density table stored in the storage device 52, and estimates the air density from the temperature on the searched route of the target vehicle 2. The temperature on the searched route may be acquired from a weather server (not shown). For example, the travel energy estimation unit 60 transmits route information to the weather server via the communication unit 51. Based on the route information, the weather server specifies the temperature of the area to which the route of the target vehicle 2 belongs, and transmits the specified temperature to the charger search device 5. The travel energy estimation unit 60 receives the temperature. The temperature at the current position measured by a temperature sensor mounted on the target vehicle 2 may be used as the temperature on the searched route. The travel energy estimation unit 60 may acquire the temperature from weather information included in the traffic condition information.

The travel energy estimation unit 60 acquires the vehicle acceleration dV/dt from the speed model. For example, the travel energy estimation unit 60 acquires, as the vehicle acceleration dV/dt, the first acceleration and the second acceleration in the right or left turn model (FIG. 5), the third acceleration and the fifth acceleration in the signal stop model (FIG. 6), and the fifth acceleration in the dedicated section model (last model) (FIG. 8).

The travel energy estimation unit 60 further estimates, for each guide section, a travel energy required for traveling from the upstream guide point to the downstream guide point. A travel energy estimation formula is the above formula 1 in which ts is the departure time at the upstream guide point and te is the arrival time at the downstream guide point.

Based on the amount of remaining power of the battery mounted on the target vehicle 2 at the departure point which is indicated by the remaining power information, and on the power consumption required for the target vehicle 2 to travel from the departure point to the arrival point which is estimated by the travel energy estimation unit 60, the required supplemental power amount calculation unit 61 calculates a required supplemental power amount that is an amount of power expected to be insufficient when the target vehicle 2 travels on the route from the departure point to the arrival point.

Here, the amount of remaining power of the battery mounted on the target vehicle 2 at the departure point is R, and the power consumption required for the target vehicle 2 to travel from the departure point to the arrival point is C. In the case of remaining power amount $R \geq$ power consumption C, the target vehicle 2 does not run out of power even if it travels on the route, so that required supplemental power amount = 0.

On the other hand, in the case of remaining power amount R < power consumption C, shortage of power by (power consumption C - remaining power amount R) is expected if the target vehicle 2 travels on the route. Therefore, the required supplemental power amount calculation unit 61 calculates (power consumption C - remaining power amount R) as the required supplemental power amount.

The chargeable power amount estimation unit 62 estimates an amount of chargeable power to the battery at a time point when the target vehicle 2 passes through a guide point on the route from the departure point to the arrival point, based on the power consumption that the travel energy estimation unit 60 has estimated for each guide section. A method for estimating the chargeable power amount will be described later.

The planned charge amount calculation unit 64 calculates a planned charge amount to the battery mounted on the target vehicle 2, based on the required supplemental power amount calculated by the required supplemental power amount calculation unit 61, a margin of a predetermined power amount, and the allowable power supply amount indicated by the allowable power supply amount information acquired by the information acquisition unit 55. Specifically, the planned charge amount calculation unit 64 calculates, as a planned charge amount, a sum of the required supplemental power amount, the margin, and the allowable power supply amount.

The charger search unit 65 searches for a charger capable of charging the battery, based on the chargeable power amount at each guide point, and the planned charge amount. A charger search method will be described later.

Assuming that chargers searched by the charger search unit 65 are candidates for a charger for charging the battery, the charger selection unit 66 calculates, for each candidate, a total time of a loss time due to the target vehicle 2 passing through the position of the candidate, and a charging time of the planned charge amount to the battery at the candidate. The charger selection unit 66 selects a candidate having the shortest calculated total time as a charger for charging the battery. That is, the charger selection unit 66 selects, from among the candidates, a charger having the minimum loss time due to charging the battery.

[Processing flow of charger search system 10]

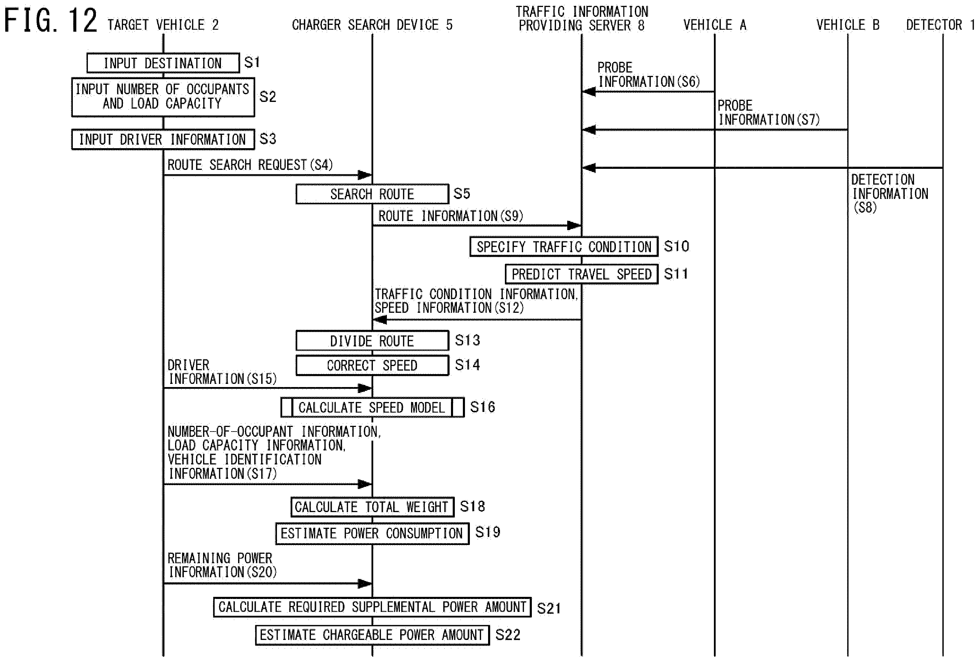

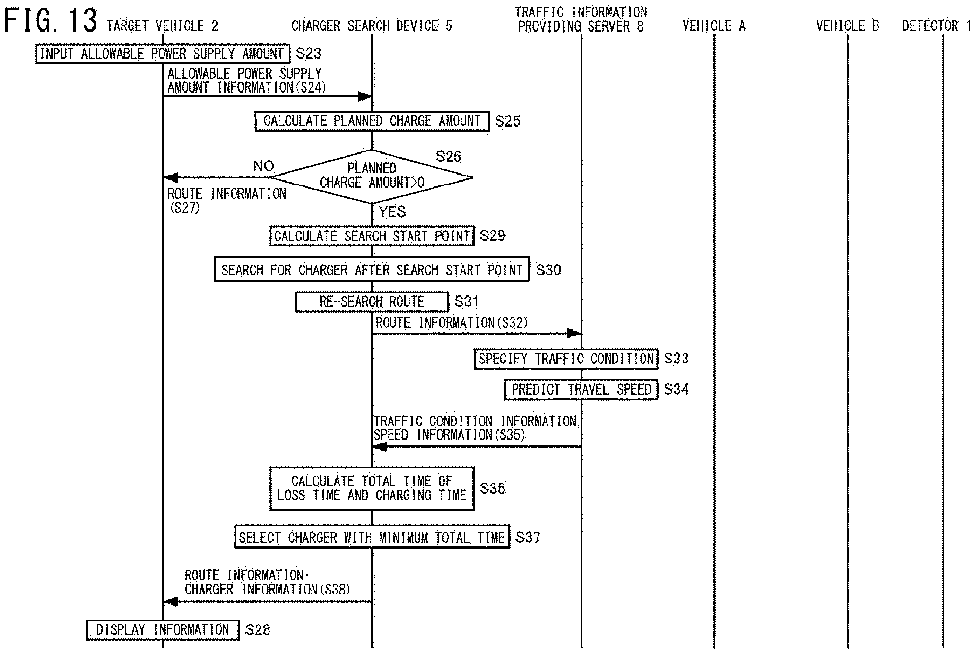

FIG. 12 and FIG. 13 are sequence diagrams showing an example of processing of the charger search system 10 according to the present disclosure. After execution of the sequence shown in FIG. 12, the sequence shown in FIG. 13 is executed.

In FIG. 12 and FIG. 13, a vehicle A and a vehicle B are shown as examples of the probe vehicle 9. However, the number of probe vehicles 9 is not limited to two. In actuality, many probe vehicles 9 exist. In FIG. 12 and FIG. 13, one detector 1 is shown. However, the number of detectors 1 is not limited to one. In actuality, many detectors 1 exist.

With reference to FIG. 12, the in-vehicle device 3 of the target vehicle 2 (hereinafter simply referred to as "target vehicle 2") receives information on a departure point and an arrival point of the target vehicle 2 inputted by an occupant of the target vehicle 2 (step S1).

The target vehicle 2 receives information indicating the number of occupants of the target vehicle 2 and the load capacity of the target vehicle 2 which are inputted by the occupant (step S2).

The target vehicle 2 receives information on the driver of the target vehicle 2 inputted by the occupant of the target vehicle 2 (step S3).

The target vehicle 2 transmits, to the charger search device 5, a route search request including the departure point and the arrival point of the target vehicle 2, and the charger search device 5 receives the route search request (step S4).

Based on the route search request, the charger search device 5 searches for a travel route from the departure point to the arrival point (step S5).

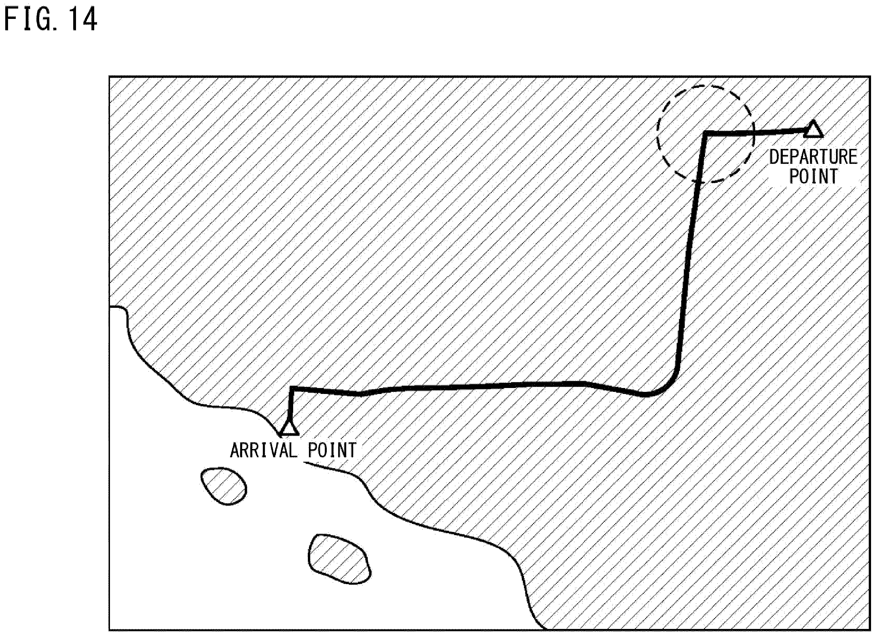

FIG. 14 shows an example of a route searched by the charger search device 5. In FIG. 14, the searched route from a departure point to an arrival point is indicated by a solid line on a map.

Referring back to FIG. 12, the vehicle A transmits probe information to the traffic information providing server 8, and the traffic information providing server 8 receives the probe information from the vehicle A (step S6).

The vehicle B transmits probe information to the traffic information providing server 8, and the traffic information providing server 8 receives the probe information from the vehicle B (step S7). The probe information transmission process (step S6, S7) is periodically (regularly) performed.

The detector 1 regularly transmits detection information to the traffic information providing server 8, and the traffic information providing server 8 receives the detection information from the detector 1 (step S8).

The charger search device 5 transmits route information indicating the route searched in the route search process (step S5) to the traffic information providing server 8, and the traffic information providing server 8 receives the route information (step S9).

Based on the detection information received from the detector 1 and the route information received from the charger search device 5, the traffic information providing server 8 specifies traffic conditions such as details of traffic accidents, traffic jams, etc., that occur on the searched route (step S10).

Based on the probe information acquired from the probe vehicles 9 including the vehicle A and the vehicle B and on the route information received from the charger search device 5, the traffic information providing server 8 predicts a typical travel speed of the probe vehicles 9 for each of road sections included in the searched route (step S11).

The traffic information providing server 8 transmits traffic condition information and speed information to the charger search device 5. The traffic condition information indicates details of traffic accidents, details of traffic jams, sudden deceleration occurrence positions, the positions of fallen objects or fallen rocks, details of traffic signals, the road shape, and traffic rules on the searched route. The speed information indicates a predicted travel speed of the target vehicle 2 for each road section on the searched route. The charger search device 5 receives the traffic condition information and the speed information from the traffic information providing server 8 (step S12).

The charger search device 5 divides the searched route into guide sections each being composed of one or a plurality of road links (step S13).

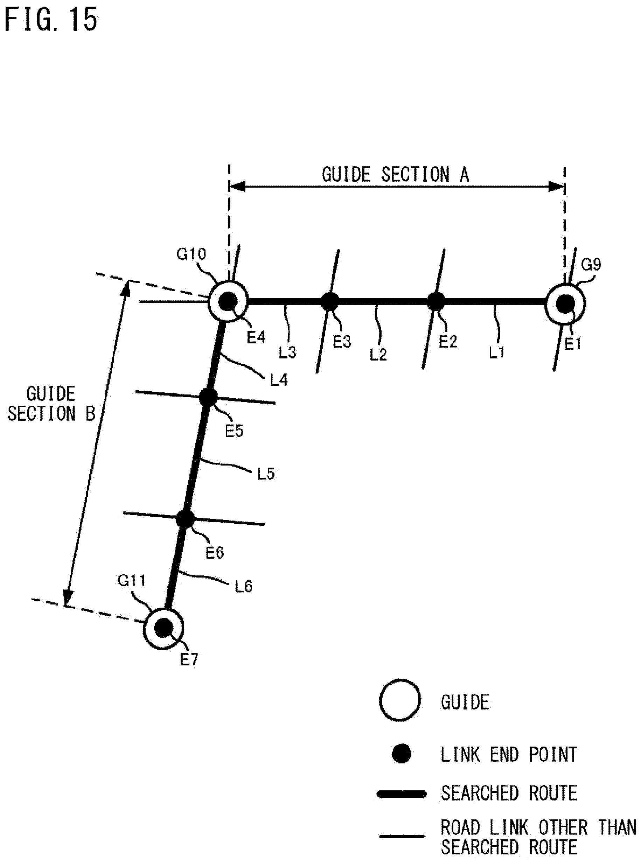

FIG. 15 shows an enlarged view of a part, surrounded by a broken line circle, of the searched route shown in FIG. 14. For example, the part of the searched route includes road links L1, L2, L3, L4, L5, L6 from the upstream side. That is, the target vehicle 2 travels through road links L1, L2, L3, L4, L5, L6 in this order. The target vehicle 2 turns left at a link end point E4 connecting the road link L3 and the road link L4. In FIG. 15, link end points are represented by black circles, the searched route is represented by a thick solid line, and road links other than the searched route are represented by thin solid lines.

The charger search device 5 determines whether or not each of the link end points E1 to E7 corresponds to a guide point. The determination method is as described above. Whether or not each link end point corresponds to a guide point may be determined by using information on guide points included in the map database, or may be dynamically determined by using the intersection type information, etc.

Here, it is assumed that the link end point E1 on the upstream side of the road link L1, the link end point E4 connecting the road link L3 and the road link L4, and the link end point E7 on the downstream side of the road link L6 are determined to be guide points.

The charger search device 5 determines sections that are delimited by the determined guide points to be guide sections, thereby dividing the searched route into the guide sections. Through this process, for example, a section composed of the road links L1, L2, L3 is determined to be a guide section A, and a section composed of the road links L4, L5, L6 is determined to be a guide section B. An upstream guide point of the guide section A, a downstream guide point of the guide section A (an upstream guide point of the guide section B), and a downstream guide point of the guide section B are referred to as a guide point G9, a guide point G10, and a guide point G11, respectively.

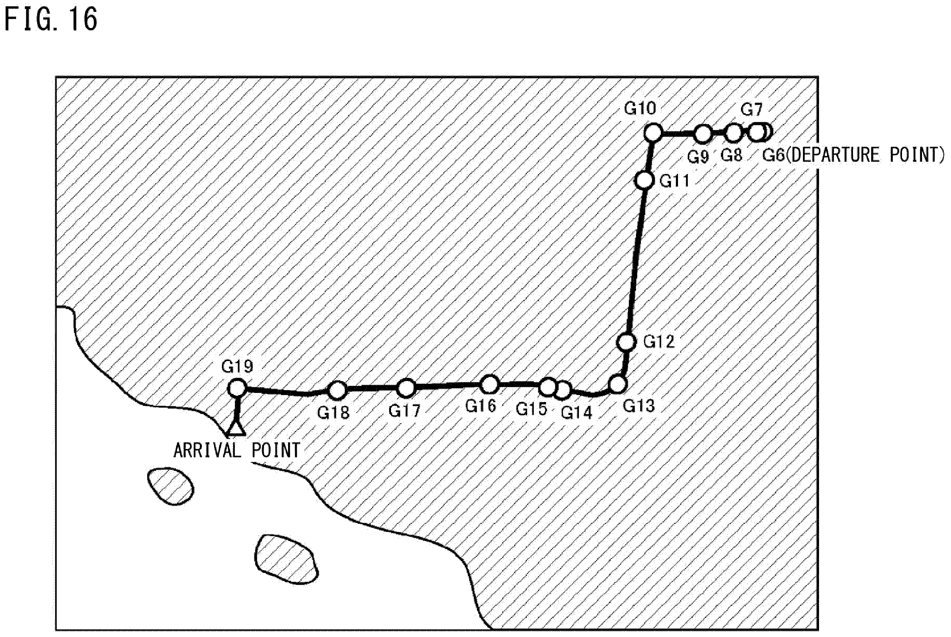

FIG. 16 shows an example of guide points that are set on the searched route through the guide section division process. In FIG. 16, the guide points set on the searched route shown in FIG. 14 are represented by white circles with guide point numbers. That is, FIG. 16 shows that the target vehicle 2 passes through the guide points G6 to G19 when traveling on the searched route from the departure point toward the arrival point. Here, the guide point G6 is the departure point.

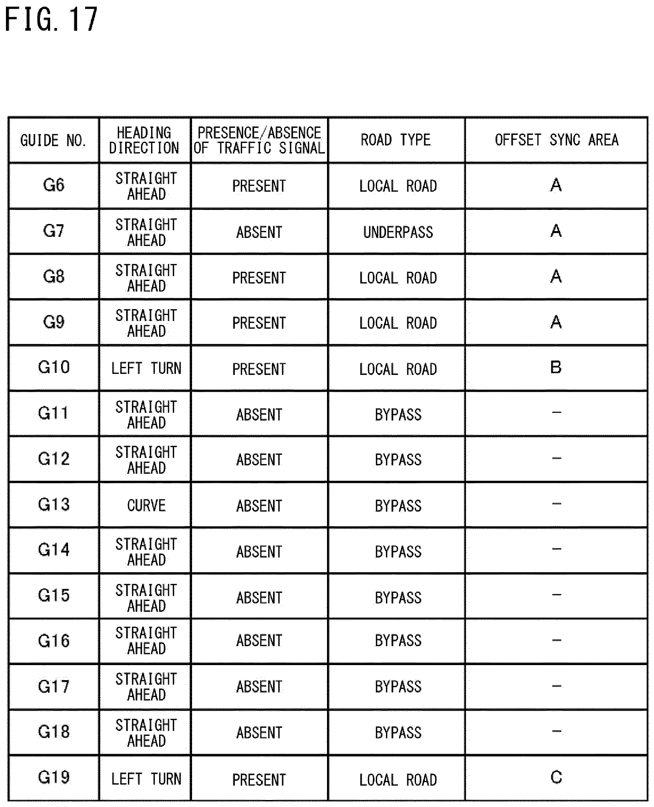

FIG. 17 shows data of guide sections generated by the guide section division process. The data shown in FIG. 17 indicate, for each guide point on the searched route, heading direction, presence/absence of traffic signal, road type, and offset sync area. The heading direction indicates the heading direction of the target vehicle 2 at the guide point. The presence/absence of traffic signal indicates presence/absence of a traffic signal at the guide point. The road type indicates the road type of the guide section. The offset sync area indicates a set of guide sections (a set of traffic signals) where offsets of traffic signals are synchronized.

The heading direction, the presence/absence of traffic signal, and the road type are generated by referring to, for example, the map information included in the map database. The offset sync area is generated by referring to, for example, the intersection type information if information on traffic signals whose signal light indications are synchronized is included in the intersection type information.

For example, the heading direction at the guide point G6 is straight ahead, a traffic signal is installed at the guide point, and the road type of the guide section from the guide point G6 to the guide point G7 is a local road. The heading direction at the guide point G7 is straight ahead, no traffic signal is installed at this guide point, and the road type of the guide section from the guide point G7 to the guide point G8 is an underpass. The offsets of the traffic signals present on the road section from the guide point G6 to the guide point G9 are synchronized (offset sync area A), and are different from the offset of the traffic signal present at the guide point G10 (offset sync area B).

Since a bypass section has no traffic signal installed therein, an offset sync area is not defined. However, even in a bypass section, a guide point is set at a road type changing point, a right or left turn point, a road branching point such as an entrance of a parking lot or an exit of a bypass, a road merging point such as an exit of a parking lot or an entrance of a bypass, or the like. For example, the guide point G11 is a guide point set at a point where the road type changes from a local road to a bypass. The guide point G13 is a guide point set at a curve point. The guide points G12, G14, G15, G16, G17, G18 in the bypass travel section are guide points set at branching points or merging points.

The charger search device 5 corrects the predicted travel speed indicated by the speed information, based on the received traffic condition information and speed information (step S14).

The target vehicle 2 transmits driver information to the charger search device 5, and the charger search device 5 receives the driver information from the target vehicle 2 (step S15).

Based on the route information, the map database, the corrected predicted travel speed, and the driver information, the charger search device 5 calculates, for each of the guide sections respectively including the guide points provided on the searched route, a speed model indicating a temporal transition of the predicted travel speed of the target vehicle 2 in the guide section (step S16).

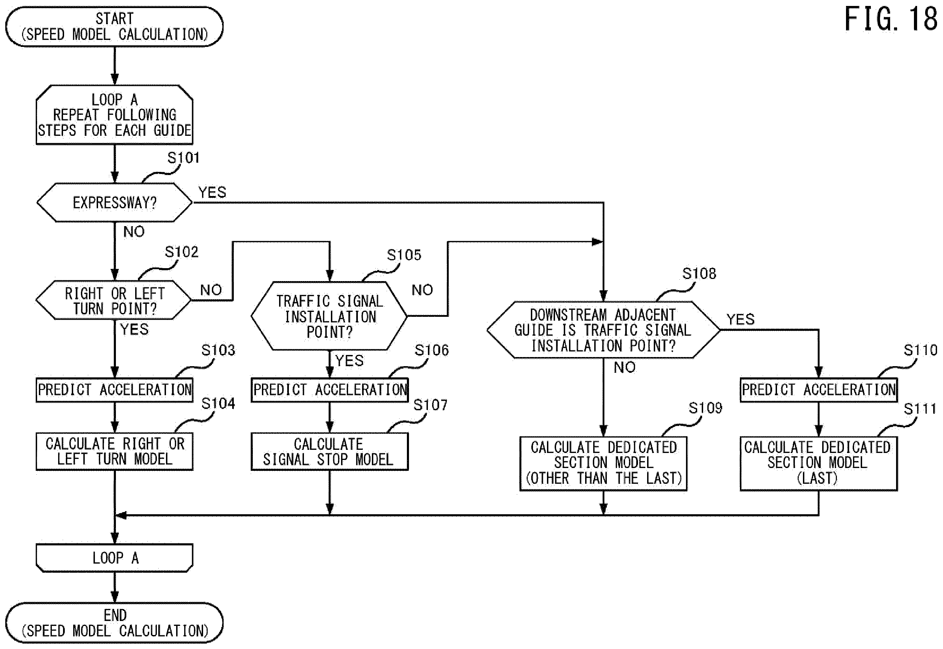

FIG. 18 is a flowchart showing the speed model calculation process (step S16 in FIG. 12) in detail. The speed model calculation process is executed by the speed model calculation unit 58 of the charger search device 5.

The charger search device 5 repeats the processes in steps S101 to S111 for each guide point (loop A).

That is, the charger search device 5 determines whether or not the road type of a guide section whose upstream guide point is a guide point of interest is an expressway (step S101).

If the road type is not an expressway (NO in step S101), the charger search device 5 determines whether or not the guide point is a right or left turn point (step S102). That is, the charger search device 5 determines that the guide point is a right or left turn point when a traffic signal is not installed at the guide point and the heading direction is left turn or right turn.

When the guide point has been determined to be a right or left turn point (YES in step S102), the charger search device 5 predicts the first acceleration and the second acceleration in the right or left turn model shown in FIG. 5, based on the driver information (step S103). For example, as described above, the charger search device 5 multiplies the predetermined first acceleration and second acceleration by a coefficient based on the driver information, thereby predicting the first acceleration and the second acceleration.

The charger search device 5 calculates the right or left turn model shown in FIG. 5 by using the predicted first acceleration and second acceleration (step S104). For example, the speed model of a guide section whose upstream guide point is the guide point G10 is the right or left turn model.

If the guide point is determined not to be a right or left turn point (NO in step S102), the charger search device 5 determines whether or not the guide point is a traffic signal installation point (step S105).

When the guide point has been determined to be a traffic signal installation point (YES in step S105), the charger search device 5 predicts the third acceleration and the fourth acceleration in the signal stop model shown in FIG. 6, based on the driver information (step S106). For example, as described above, the charger search device 5 multiplies the predetermined third acceleration and fourth acceleration by a coefficient based on the driver information, thereby predicting the third acceleration and the fourth acceleration.

The charger search device 5 calculates the signal stop model shown in FIG. 6 by using the predicted third acceleration and fourth acceleration (step S107). For example, the speed model of a guide section whose upstream guide point is the guide point G6 is the signal stop model.

If the guide point is neither a right or left turn point nor a traffic signal installation point (NO in step S105), or if the road type corresponding to the guide point is an expressway (YES in step S101), the charger search device 5 determines whether or not a guide point that is downstream of and adjacent to the guide point is a traffic signal installation point (step S108).

If the adjacent guide point is not a traffic signal installation point (NO in step S108), the traffic information providing server 8 calculates the dedicated section model (other than last model) shown in FIG. 7 (step S109). For example, the speed model of a guide section whose upstream guide point is the guide point G11 is the dedicated section model (other than last model).

If the adjacent guide point is a traffic signal installation point (YES in step S108), the traffic information providing server 8 predicts the fifth acceleration in the dedicated section model (last model) shown in FIG. 8 (step S110). For example, as described above, the charger search device 5 multiplies the predetermined fifth acceleration by a coefficient based on the driver information, thereby predicting the fifth acceleration.

The charger search device 5 calculates the dedicated section model (last model) shown in FIG. 8 by using the predicted fifth acceleration (step S111). For example, the speed model of a guide section whose upstream guide point is the guide point G18 is the dedicated section model (last model).

The charger search device 5 may predict whether or not the target vehicle 2 will stop at a traffic signal installation point, based on information on the offset sync area, and set the traffic signal installation point to a right or left turn point or the other point, based on the prediction result. For example, based on the cycles and offsets of traffic signals installed in the offset sync area A and on the predicted travel time in the offset sync area A, the charger search device 5 predicts a traffic signal installation point, in the offset sync area A, where the target vehicle 2 will stop at a red light. For example, if one cycle period of red light is included in the predicted travel time of the offset sync area A, the charger search device 5 predicts that the target vehicle 2 will stop at a red light in one traffic signal installation point that is selected at random from the offset sync area A, and predicts that the target vehicle 2 will not stop at a red light in the other traffic signal installation points included in the offset sync area A.

If the heading direction at a traffic signal installation point other than the traffic signal installation point where the target vehicle 2 is predicted to stop at a red light is right turn or left turn, the charger search device 5 sets this point to a right or left turn point. If the heading direction at a traffic signal installation point other than the traffic signal installation point where the target vehicle 2 is predicted to stop at a red light is straight ahead, the charger search device 5 determines that this point is neither a right or left turn point nor a traffic signal installation point. Then, the charger search device 5 executes the process shown in FIG. 18, and calculates the speed model.

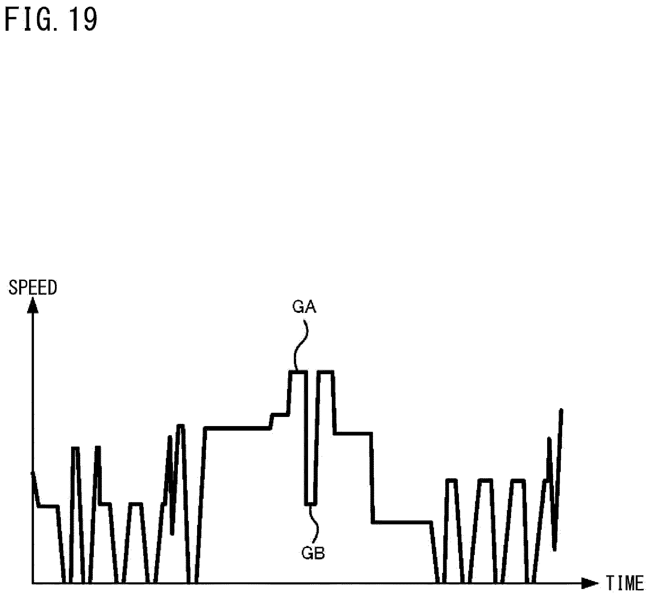

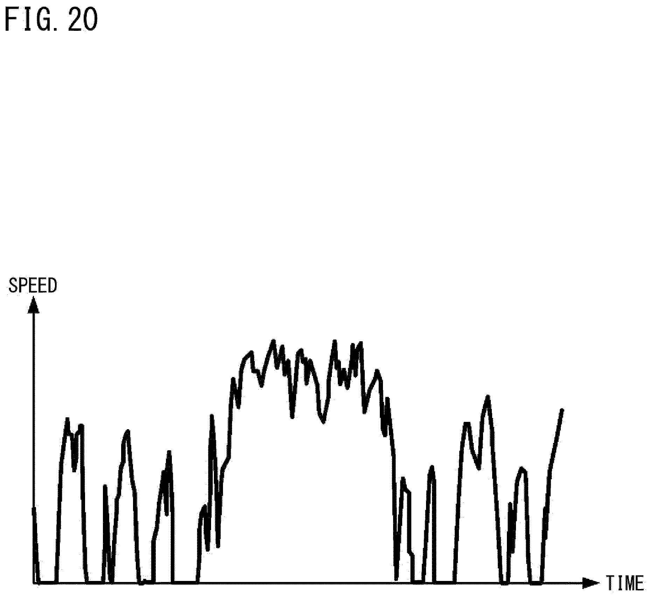

FIG. 19 shows a speed change based on a speed model, calculated by the charger search device 5, of the target vehicle 2 during traveling on the searched route. FIG. 20 shows a speed change when the target vehicle 2 actually travels on the same searched route as that shown in FIG. 19.

In FIG. 19 and FIG. 20, the horizontal axis represents common time, and the vertical axis represents speed. For example, in FIG. 19, a travel model GA and a travel model GB each being a dedicated section model (other than last model) having a constant travel speed, are continuously arranged. This indicates that the target vehicle 2 is traveling on a bypass. However, the speed of the travel model GB is significantly lower than the speed of the travel model GA, and the speed is changed stepwise in the travel model GA and the travel model GB. This indicates that the target vehicle 2 is decelerated due to a curve at the guide point G13 corresponding to the travel model GB.

As shown in FIG. 19 and FIG. 20, the speed change of the target vehicle 2 indicated by the speed model and the actual speed change of the target vehicle 2 are similar to each other from an overall view. Since the charger search device 5 expresses the modeled travel speed of the target vehicle 2, the magnitude of a numerical value or the like may locally differ from the actual one. However, the speed model created as described above allows presence/absence of acceleration or deceleration that is dominant in energy consumption to be reproduced with a relatively high accuracy, in a more concise manner. As a result, the estimated value of the travel energy is similar to the actual value from an overall view. Thus, according to the present disclosure, estimation of highly accurate travel energy can be performed through a relatively simple process.

Referring back to FIG. 12, the target vehicle 2 transmits, to the charger search device 5, the number-of-occupants information, the load capacity information, and the identification information of the target vehicle 2, and the charger search device 5 receives these pieces of information (step S17).

The charger search device 5 calculates a total weight of the target vehicle 2, based on the number-of-occupants information, the load capacity information, and the identification information (step S18).

The charger search device 5 estimates power consumption of the target vehicle 2 during traveling on the searched route, based on the route information, the speed model, the traffic condition information, the identification information of the target vehicle 2, and the total weight of the target vehicle 2 (step S19).

The target vehicle 2 transmits, to the charger search device 5, the remaining power information of the battery at the departure point, and the charger search device 5 receives the remaining power information (step S20).

The charger search device 5 calculates the required supplemental power amount, based on the power consumption, estimated in step S19, of the target vehicle 2 required if the target vehicle 2 travels to the arrival point, and the remaining power amount of the target vehicle 2 at the departure point, indicated by the remaining power information received in step S20 (step S21). For example, when the power consumption of the target vehicle 2 is 60 kWh and the remaining power amount at the departure point is 50 kWh, the required supplemental power amount is 10 kWh.

The charger search device 5 estimates the chargeable power amount at each guide point on the searched route, based on the remaining power amount of the target vehicle 2 at the departure point, indicated by the remaining power information received in step S20, and the power consumption that the travel energy estimation unit 60 has estimated for each guide section (step S22). Specifically, the chargeable power amount estimation unit 62 of the charger search device 5 successively reduces, from the amount of remaining power of the battery at the departure point, the power consumption at each guide section from the upstream side toward the downstream side of the searched route, thereby estimating the remaining power amount at each guide point. Based on the calculated remaining power amount, the chargeable power amount estimation unit 62 estimates the chargeable power amount to the battery of the target vehicle 2.

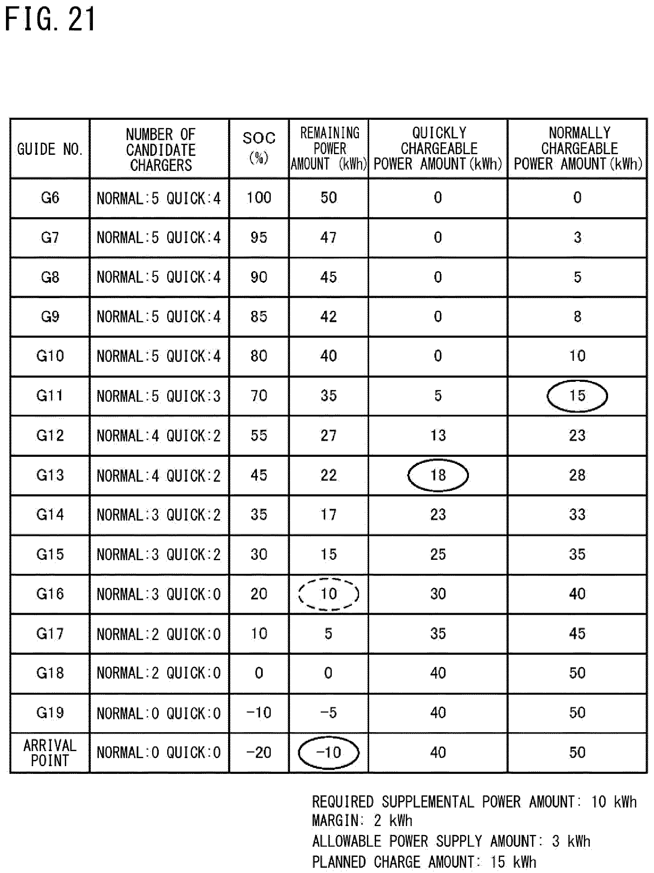

FIG. 21 shows the number of candidate chargers that is the number of chargers existing near a route from each guide point to the arrival point, and the battery condition at each guide point. FIG. 21 shows the number of candidate chargers, the battery SOC (%), the amount of remaining power of the battery (kWh), a quickly chargeable power amount (kWh) described later, and a normally chargeable power amount (kWh) for each guide point on the searched route.

Here, it is assumed that the remaining power amount of the fully-charged battery of the target vehicle 2 is 50 kWh. For example, the number of normal chargers existing on and near the route from the guide point G6 (departure point) to the arrival point is 10, and the number of quick chargers existing on and near the route is 8. In addition, the SOC of the battery of the target vehicle 2 at the guide point G6 is 100%, and the remaining power amount of the battery is 50 kWh.

The chargeable power amount estimation unit 62 estimates a quickly chargeable power amount according to formulae 6A to 6C below, and estimates a normally chargeable power amount according to formulae 7A and 7B below. The quickly chargeable power amount is an amount of power chargeable to the battery by a quick charger. Here, it is assumed that the quick charger can charge the battery only until the SOC of the battery reaches a predetermined SOC threshold value (here, 80%). Therefore, if the SOC exceeds 80% (remaining power amount > 40), the quickly chargeable power amount is 0. The normally chargeable power amount indicates an amount of power chargeable to the battery by a normal charger. The normal charger can charge the battery until the SOC of the battery reaches 100%. Therefore, the normally chargeable power amount is equal to the available capacity of the battery.

quickly chargeable power amount = 0 (provided that remaining power amount > 40)     (formula 6A)

quickly chargeable power amount = 40 - remaining power amount (provided that $0 \leq$ remaining power amount $\leq 40$)     (formula 6B)

quickly chargeable power amount = 40 (provided that remaining power amount < 0)     (formula 6C)

normally chargeable power amount = 50 - remaining power amount (provided that remaining power amount $\geq 0$)     (formula 7A)

normally chargeable power amount = 50 (provided that remaining power amount < 0)     (formula 7B)

For example, the power consumption of the target vehicle 2 in the guide section from the guide point G6 to the guide point G7 is 3 kWh. Therefore, the remaining power amount becomes 47 kWh being a value obtained by subtracting the power consumption of 3 kWh from the remaining power amount of 50 kWh at the guide point G6. The SOC becomes 95% being a value corresponding to the remaining power amount of 47 kWh. The quickly chargeable power amount is 0, and the normally chargeable power amount is 3.

It is assumed that the power consumption of the target vehicle 2 in the guide section from the guide point G7 to the guide point G8 is 2 kWh. Therefore, the remaining power amount becomes 45 kWh being a value obtained by subtracting the power consumption of 2 kWh from the remaining power amount of 47 kWh at the guide point G7. The SOC becomes 90% being a value corresponding to the remaining power amount of 45 kWh. The quickly chargeable power amount is 0, and the normally chargeable power amount is 5.

In a similar manner, the chargeable power amount estimation unit 62 estimates the remaining power amount up to the arrival point, and estimates the quickly chargeable power amount and the normally chargeable power amount, based on the estimated remaining power amount.

With reference to FIG. 13, the target vehicle 2 receives information on the allowable power supply amount at the arrival point inputted by an occupant of the target vehicle 2 (step S23).

The target vehicle 2 transmits the allowable power supply amount information at the arrival point to the charger search device 5, and the charger search device 5 receives the allowable power supply amount information (step S24).

The charger search device 5 calculates, as a planned charge amount, a sum of the required supplemental power amount calculated in step S21, the predetermined margin, and the allowable power supply amount indicated by the allowable power supply amount information received in step S24 (step S25). For example, the required supplemental power amount is 10 kWh, the margin is 2 kWh, and the allowable power supply amount is 3 kWh. **In** this case, the planned charge amount is 15 kWh.

If the planned charge amount is 0 or less (NO in step S26), the charger search device 5 need not search for a charger for charging the battery. Therefore, the charger search device 5 transmits, to the target vehicle 2, the route information of the target vehicle 2 searched in the route search process (step S5), and the target vehicle 2 receives the information (step S27).

The target vehicle 2 displays the route information received from the charger search device 5, on the display 45 (step S28).

When the planned charge amount is larger than 0 (YES in step S26), the charger search unit 65 in the charger search device 5 calculates a point at which charging to the target vehicle 2 by a charger becomes possible (hereinafter referred to as "search start point") (step S29). That is, the charger search unit 65 calculates, as a search start point, a guide point at which the chargeable power amount becomes equal to or larger than the planned charge amount for the first time in the route from the departure point to the arrival point. For example, in the example shown in FIG. 21, it is assumed that the planned charge amount is 15 kWh. In this case, a guide point at which the quickly chargeable power amount becomes equal to or larger than the planned charge amount of 15 kWh for the first time is the guide point G13. Therefore, the charger search unit 65 calculates the guide point G13 as a search start point for a quick charger. A guide point at which the normally chargeable power amount becomes equal to or larger than the planned charge amount of 15 kWh for the first time is the guide point G11. Therefore, the charger search unit 65 calculates the guide point G11 as a search start point for a normal charger.

The charger search unit 65 of the charger search device 5 searches for a charger existing in the route from the search start point to the arrival point (step S30).

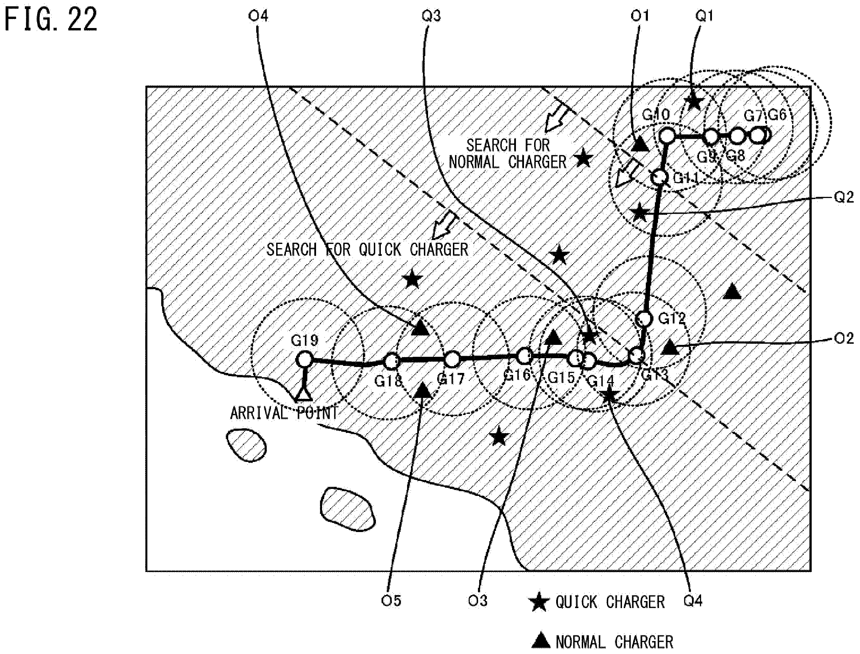

FIG. 22 shows an example of guide points and charger positions set on a searched route. FIG. 22 shows an example of a map on which the searched route, the guide points, and the charger positions are shown. Stars indicate the positions of quick chargers, and triangles indicate the positions of normal chargers. The searched route and the guide points are identical to those shown in FIG. 16. An area around a guide point and within a predetermined distance from the guide point is indicated by a dotted-line circle. That is, an area around a guide point means an area within a circle having a radius equal to a predetermined distance from the guide point. Chargers included in this circle are chargers existing around the guide point or the searched route. The size of the circle is determined in advance. The size of the circle or the aforementioned margin is set such that the target vehicle 2 can make a round trip in the circle with the amount of power indicated by the margin. The margin may include the amount of power required for the target vehicle 2 to go to a charger near the arrival point. The area around the guide point may be indicated by a pattern other than a circle.

In the example shown in FIG. 22, a quick charger Q1 is included in each of areas around the guide points G8, G9, G10, a quick charger Q2 is included in an area around the guide point G11, and quick chargers Q3, Q4 are included in each of areas around the guide points G13, G14, G15. Therefore, as shown in FIG. 21, the number of candidate quick chargers at each of the guide points G6 to G10 is 4, the number of candidate quick chargers at the guide point G11 is 3, the number of candidate quick chargers at each of the guide points G12 to G15 is 2, and the number of candidate quick chargers at each of the guide points G16 to G19 and the arrival point is 0. The number of candidate normal chargers is similarly derived.

Therefore, in the example shown in FIG. 22, the charger search unit 65 searches for quick chargers Q3, Q4 existing on or near the route from the guide point G13 which is a search start point for quick chargers, to the arrival point. Moreover, the charger search unit 65 searches for normal chargers O1, O2, O3, O4, O5 existing on or near the route from the guide point G11 which is a search start point for normal chargers, to the arrival point.

Referring back to FIG. 13, the route search unit 54 of the charger search device 5 searches for a travel route of the target vehicle 2 passing through the chargers searched in the charger search process (step S30) (step S31). Searching for the travel route is performed similarly to the route search process (step S5). For example, seven travel routes passing through the quick chargers Q3, Q4 and the normal chargers O1, O2, O3, O4, O5 are searched for.

The charger search device 5 transmits, to the traffic information providing server 8, route information indicating the route searched in the route re-search process (step S31), and the traffic information providing server 8 receives this route information (step S32).

The traffic information providing server 8 specifies traffic conditions such as details of traffic accidents, details of traffic jams, and the traffic regulations that occur on and near the searched route, based on the detection information received from the detector 1, and the route information received from the charger search device 5 (step S33).

Based on the probe information acquired from the probe vehicles 9 including the vehicle A and the vehicle B, and the route information received from the charger search device 5, the traffic information providing server 8 predicts a typical traveling speed of the probe vehicles 9 for each of road sections included in the searched route (step S34).

The traffic information providing server 8 transmits, to the charger search device 5, the traffic condition information indicating details of traffic accidents, details of traffic jams, positions of fallen objects or fallen rocks, traffic regulations, and traffic rules, on the searched route, and the speed information indicating the predicted travel speed of the target vehicle 2 for each road section on the searched route. The charger search device 5 receives the traffic condition information and the speed information from the traffic information providing server 8 (step S35).

When the chargers searched in the charger search process (step S31) are regarded as candidates for a charger for charging the battery of the target vehicle 2, the charger search device 5 calculates, for each candidate, a loss time due to the target vehicle 2 passing through the position of the candidate, and a charging time of power of the planned charge amount to the battery at the candidate. The charger search device 5 calculates a total time of the calculated loss time and charging time (step S36). In the example of FIG. 22, the total time of the loss time and the charging time is calculated for each of the quick chargers Q3, Q4 and the normal chargers O1, O2, O3, O4, O5.

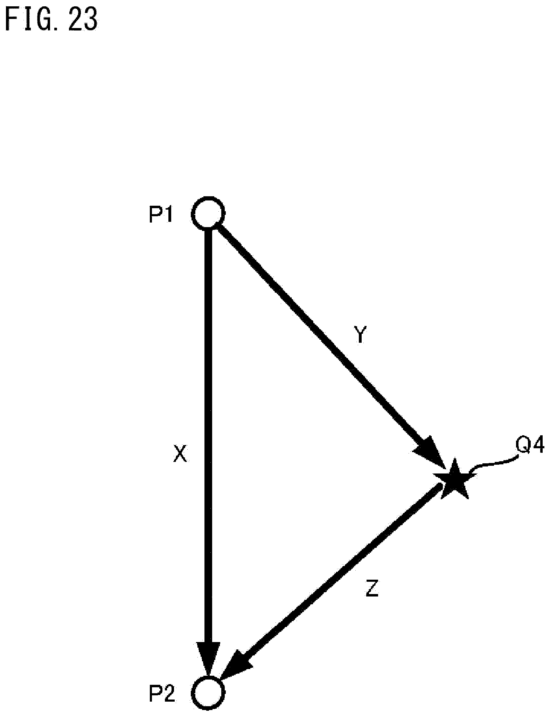

Here, the loss time is calculated as follows. FIG. 23 schematically shows a searched route passing through the position of a candidate charger, and a searched route not passing through the position of the candidate charger. As shown in FIG. 23, among the routes searched in the route search process (step S5), a route from a point P1 to a point P2 is schematically shown by a straight line X. In addition, among the routes searched in the route re-search process (step S31), a route from the point P1 to the quick charger Q4 is schematically shown by a straight line Y, and a route from the quick charger Q4 to the point P2 is schematically shown by a straight line Z. In this case, the loss time due to the target vehicle 2 passing through the quick charger Q4 is calculated as (travel time on Y + travel time on Z - travel time on X). That is, the loss time is a difference between the travel time on the searched route in the case of performing charging (the charging time is not included), and the travel time on the searched route in the case of not performing charging. Here, the charger search device 5 calculates the travel time on X, based on the typical travel speed indicated by the speed information received from the traffic information providing server 8 in step S12. Also, the charger search device 5 calculates the travel times on Y and Z, based on the typical travel speed indicated by the speed information received from the traffic information providing server 8 in step S35.

In calculating the travel time, the charger search device 5 may take into consideration the traffic condition information received from the traffic information providing server 8. For example, if a traffic accident has occurred, traffic regulations are imposed, or a traffic jam has occurred on the searched route, the travel time may be calculated after correcting the typical travel speed by multiplying the typical travel speed by a predetermined coefficient less than 1.

If a charger exists on the searched route that is searched in the route search process (step S5) and is schematically shown by the straight line X, the loss time is 0.

The charging time is calculated as follows. That is, the charger search device 5 calculates the charging time by dividing the planned charge amount calculated in the planned charge amount calculation process (step S25) by a charging speed that is determined in advance for each type of charger. For example, if the planned charge amount is 15 kWh and the charging speed of the quick charger Q4 is 30 kWh/h, the charging time is 30 minutes. The charging time calculation method is not limited thereto. Since the charging speed varies depending on the SOC of the battery, the charging time may be calculated taking the SOC into consideration.

The charger search device 5 selects a charger having the minimum total time of the loss time and the charging time from among the candidate chargers (step S37). In the example shown in FIG. 22, the charger search device 5 selects a charger having the minimum total time of the loss time and the charging time from among the quick chargers Q3, Q4 and the normal chargers O1, O2, O3, O4, O5.

The charger search device 5 transmits, to the target vehicle 2, information on a route that passes through the selected charger, and information on the selected charger, and the target vehicle 2 receives the route information and the charger information (step S38). The charger information includes, for example, information such as the type of the charger, the position of the charger, and business hours of a charging station where the charger is installed.

The target vehicle 2 displays, on the display 45, the route information and the charger information received from the charger search device 5 (step S28).

In the above description, the traffic information providing server 8 executes the traffic condition specifying process (step S10) upon acquisition of the route information from the charger search device 5. However, the traffic information providing server 8 may execute the traffic condition specifying process at other timings. For example, the traffic information providing server 8 may specify the traffic conditions in a constant cycle (e.g., every 5 minutes), and may transmit the traffic conditions to the charger search device 5 in response to a request from the charger search device 5, or each time the traffic conditions are specified.

Furthermore, the charger search device 5 may search for a travel route again, based on the traffic conditions acquired while the target vehicle 2 is traveling, and may search for a charger again, based on the updated searched route. The user may select a desired charger from among chargers having been found again, or the charger search device 5 may execute the processes in steps S31 to S37 to select a charger from among the chargers having been found again.

Thus, even when the traffic conditions have changed due to a traffic jam or the like, it is possible to reselect a charger.

As described above, according to Embodiment 1 of the present disclosure, a route having been searched by the charger search device 5 is divided into one or more sections each being composed of one or a plurality of road links, on the basis of the speed change prediction points. Therefore, the section length is ensured to be always equal to or larger than the road link length, and each section can be configured to include a speed change prediction point. Therefore, the search route need not be divided more than necessary, and can be divided into sections in which the power consumption can be highly accurately estimated. In addition, the speed model is provided for each section including a speed change prediction point. Therefore, an event of a speed change such as acceleration or deceleration of the target vehicle 2, which occurs in the point or the section, can be reflected in the speed model. Since the power consumption is estimated based on the speed model in which the event of the speed change is reflected, it is possible to highly accurately estimate the power consumption of the target vehicle 2 during traveling on each section.

Using the power consumption highly accurately estimated as described above allows calculation of an accurate required supplemental power amount, and estimation of an accurate chargeable power amount. Moreover, an accurate planned charge amount can be calculated based on the accurate required supplemental power amount. Since the margin can be included in the planned charge amount, power for traveling to and from the charger is also ensured. Therefore, the charger search unit 65 can search for a charger, based on the accurate chargeable power amount and planned charge amount. This allows the target vehicle 2 to start searching for a charger from an appropriate traveling position. Since searching for a charger can be started from an appropriate traveling position, the range of options in selecting a charger is wide, and the possibility of finding a quick charger can be increased. This allows the target vehicle 2 to arrive at the arrival point without causing a power shortage, and suppresses the battery charging time to a time as short as possible.

The planned charge amount includes the allowable power supply amount. Therefore, the target vehicle 2 can search for a charger such that the allowable amount of power can be supplied to the power supply target after arrival at the arrival point.

The charger search device 5 searches for a charger when the planned charge amount exceeds 0. Therefore, unnecessary search for chargers can be avoided.

The charger search device 5 searches for a charger, based on a route, on which the target vehicle 2 is planned to travel, from a guide point where the chargeable power amount is equal to or larger than the planned charge amount, to the arrival point. After the guide point where the chargeable power amount exceeds the planned charge amount, it is possible to charge the battery with the planned charge amount. By searching for a charger along the route from the point where the battery can be charged, the search for a charger can be started at an early stage. Therefore, the range of options in selecting a charger is wide, and the possibility of finding a quick charger can be increased. Thus, it is possible to suppress the battery charging time to a time as short as possible.

If a charger does not exist on the route, on which the target vehicle 2 is planned to travel, from the guide point where the chargeable power amount is equal to or larger than the planned charge amount, to the arrival point, the charger search device 5 can search for a charger capable of charging the battery from among chargers located within a predetermined distance from the route. This is because the planned charge amount includes the margin that is the charging amount for making a round trip from the route to a point at the predetermined distance. That is, even if the target vehicle 2 has consumed the amount of power (margin) for making a round trip from the route to a charger located within the predetermined distance, the target vehicle 2 can arrive at the arrival point. Thus, the range of options in selecting a charger can be increased.

The charger search device 5 can select a charger that takes the shortest time for charging among the found chargers, as a charger for charging the battery. Thus, the time until reaching the arrival point can be minimized. For example, at a location where supply of electric power is desired, such as a disaster-stricken area, it is possible to supply electric power on a specified time.

The charger search device 5 can calculate a loss time due to the target vehicle 2 passing through the position of a candidate charger, based on at least one of: information on traffic jams on a travel route to the position of the candidate; and information on traffic regulations that regulate traveling on the travel route. Therefore, it is possible to accurately calculate a total time of the loss time and the charging time.

The charger search device 5 estimates the quickly chargeable power amount being the chargeable power amount in the case of charging the battery with a quick charger, and the normally chargeable power amount being the chargeable power amount in the case of charging the battery with a normal charger, separately from each other. Therefore, the charger search device 5 can estimate an accurate chargeable power amount according to the type of the charger. This allows the target vehicle 2 to start search for a charger from an appropriate traveling position, for each of the quick charger and the normal charger.

<Embodiment 2>

In Embodiment 1 described above, a quick charger and a normal charger are respectively searched for, and one charger is selected from among the found chargers. In contrast to Embodiment 1, in Embodiment 2, a quick charger is searched for and selected in preference to a normal charger.

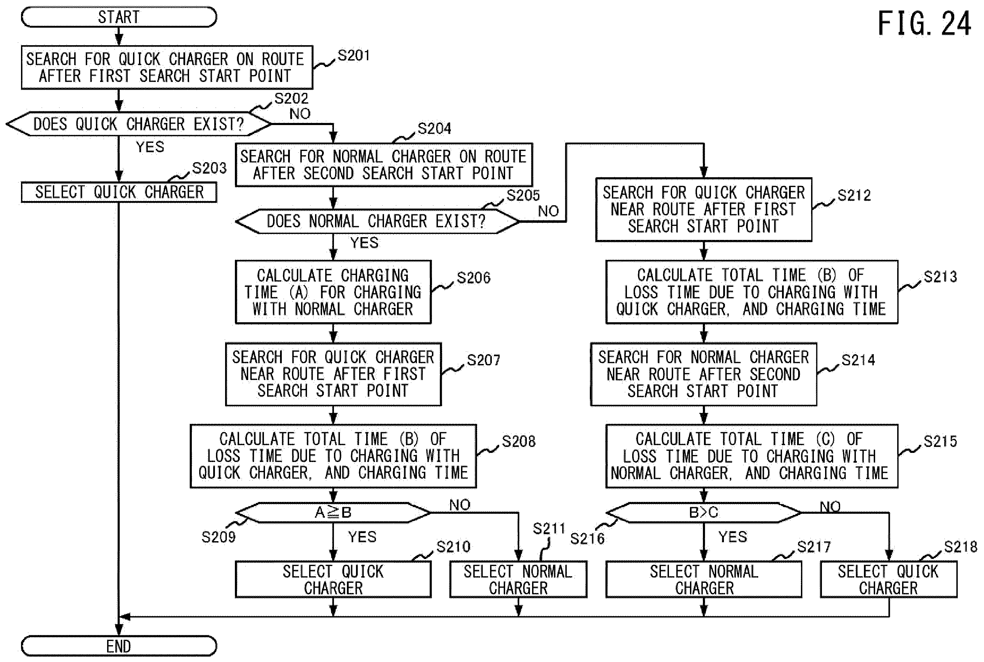

FIG. 24 is a flowchart showing an example of a charger selection process according to Embodiment 2 of the present disclosure. The charger selection process is executed instead of steps S30 to S37 shown in FIG. 13 by the charger search device 5.

Here, it is assumed that a search start point for a quick charger searched in the search start point calculation process (step S29 in FIG. 13) is a first search start point, and a search start point for a normal charger searched in the process is a second search start point.

With reference to FIG. 24, the charger search unit 65 searches for a quick charger existing on a searched route from the first search start point to the arrival point (step S201).

If quick chargers exist on the searched route (YES in step S202), the charger selection unit 66 selects one of the quick chargers, as a charger for charging the battery (step S203). If a plurality of quick chargers have been found, it is preferable to select the most upstream quick charger. This is because, even if charging cannot be performed with the most upstream quick charger, there is a high possibility that charging can be performed with a downstream quick charger.

If no quick charger exists on the searched route (NO in step S202), the charger search unit 65 searches for normal chargers existing on a searched route from the second search start point to the arrival point (step S204).

If a normal charger exists on the searched route (YES in step S205), the charger selection unit 66 calculates a charging time A required when charging is performed with the normal charger existing on the searched route (step S206). If a plurality of normal chargers exist on the searched route, the charger selection unit 66 calculates the minimum charging time A.

The charger search unit 65 searches for a quick charger existing near the searched route from the first search start point to the arrival point (step S207).

The charger selection unit 66 calculates a total time B of a loss time due to the target vehicle 2 passing through the found quick charger, and a charging time required for charging with the quick charger (step S208). If a plurality of quick chargers have been found, the charger selection unit 66 calculates the minimum total time B. The charger selection unit 66 compares the charging time A with the total time B (step S209).

If the total time B is equal to or less than the charging time A (YES in step S209), the charger selection unit 66 selects a quick charger having the shortest total time B as a charger for charging the battery (step S210).

If the charging time A is less than the total time B (NO in step S209), the charger selection unit 66 selects a normal charger having the shortest charging time A as a charger for charging the battery (step S211). When no quick charger has been selected in the quick charger search process (step S207), the charger selection unit 66 selects a normal charger having the shortest charging time A as a charger for charging the battery.

If no normal charger exists on the searched route (NO in step S205), the charger search unit 65 searches for a quick charger existing near the searched route from the first search start point to the arrival point (step S212).

The charger selection unit 66 calculates a total time B of a loss time due to the target vehicle 2 passing through the found quick charger, and a charging time required for charging with the quick charger (step S213). If a plurality of quick chargers have been found, the charger selection unit 66 calculates the minimum total time B.

The charger search unit 65 searches for a normal charger existing near the searched route from the second search start point to the arrival point (step S214).

The charger selection unit 66 calculates a total time C of a loss time due to the target vehicle 2 passing through the found normal charger, and a charging time required for charging with the normal charger (step S213). If a plurality of quick chargers have been found, the charger selection unit 66 calculates the minimum total time C.

The charger selection unit 66 compares the total time B with the total time C (step S216).

If the total time C is less than the total time B (YES in step S216), the charger selection unit 66 selects a normal charger having the shortest total time C as a charger for charging the battery (step S217). When no quick charger has been found in the quick charger search process (step S212) and normal chargers have been found in the normal charger search process (step S214), the charger selection unit 66 selects a normal charger having the shortest total time C as a charger for charging the battery.

If the total time B is less than the total time C (NO in step S216), the charger selection unit 66 selects a quick charger having the shortest total time B as a charger for charging the battery (step S218). When quick chargers have been found in the quick charger search process (step S212) and no normal charger is found in the normal charger search process (step S214), the charger selection unit 66 selects a quick charger having the shortest total time B as a charger for charging the battery.

The charging time of a quick charger is overwhelmingly shorter than that of a normal charger. According to Embodiment 2, when a quick charger on the searched route has been successfully found, it is possible to cancel the search for a normal charger. Therefore, it is possible to efficiently search for a charger.

Although not shown in FIG. 24, the charger search device 5 and the traffic information providing server 8 execute the processes in steps S31 to S35 shown in FIG. 13 in order to calculate the loss time.

<Embodiment 3>

Similarly to Embodiment 2, in Embodiment 3, a quick charger is searched for and selected in preference to a normal charger.

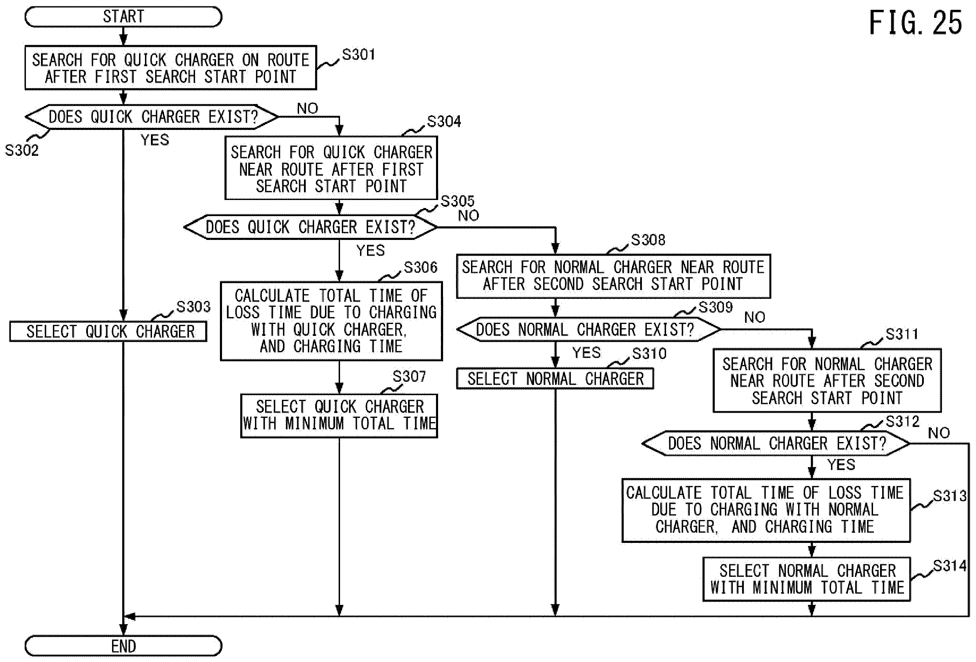

FIG. 25 is a flowchart showing an example of a charger selection process according to Embodiment 3 of the present disclosure. The charger selection process is executed instead of steps S30 to S37 shown in FIG. 13 by the charger search device 5.

Here, it is assumed that a search start point for a quick charger searched in the search start point calculation process (step S29 in FIG. 13) is a first search start point, and a search start point for a normal charger searched in the process is a second search start point.

With reference to FIG. 25, the charger search unit 65 searches for a quick charger existing on a searched route from the first search start point to the arrival point (step S301).

If quick chargers exist on the searched route (YES in step S302), the charger selection unit 66 selects one of the found quick chargers as a charger for charging the battery (step S303). If a plurality of quick chargers have been found, it is preferable to select the most upstream quick charger. This is because, even if charging cannot be performed with the most upstream quick charger, there is a high possibility that charging can be performed with a downstream quick charger.

If no quick charger exists on the searched route (NO in step S302), the charger search unit 65 searches for a quick charger existing near the searched route from the first search start point to the arrival point (step S304).

If a quick charger exists near the searched route (YES in step S305), the charger selection unit 66 calculates a total time of a loss time due to the target vehicle 2 passing through the found quick charger, and a charging time required for charging with this quick charger (step S306).

The charger selection unit 66 selects a quick charger having the minimum calculated total time as a charger for charging the battery (step S307).

If no quick charger exists near the searched route (NO in step S305), the charger search unit 65 searches for a normal charger existing on the searched route from the second search start point to the arrival point (step S308).

If normal chargers exist on the searched route (YES in step S309), the charger selection unit 66 selects one of the found normal chargers as a charger for charging the battery (step S310). If a plurality of normal chargers have been found, it is preferable to select the most upstream normal charger. This is because, even if charging cannot be performed with the most upstream normal charger, there is a high possibility that charging can be performed with a downstream normal charger.

If no normal charger exists on the searched route (NO in step S309), the charger selection unit 66 searches for a normal charger existing near the searched route from the second search start point to the arrival point (step S311).

If a normal charger exists near the searched route (YES in step S312), the charger selection unit 66 calculates a total time of a loss time due to the target vehicle 2 passing through the found normal charger, and a charging time required for charging with this normal charger (step S313).

The charger selection unit 66 selects a normal charger having the minimum calculated total time as a charger for charging the battery (step S314).

The charging time of a quick charger is overwhelmingly shorter than that of a normal charger. According to Embodiment 3, when a quick charger on the searched route has been successfully found, it is possible to cancel the search for normal chargers. Therefore, it is possible to efficiently search for a charger.

Although not shown in FIG. 25, the charger search device 5 and the traffic information providing server 8 execute the processes in steps S31 to S35 shown in FIG. 13 in order to calculate the loss time.

<Modification 1>

In Embodiments 1 to 3, the allowable amount of power is supplied to the power supply target at the arrival point, but power may not necessarily be supplied at the arrival point. In this case, the charger search device 5 can select a charger for charging the battery of the target vehicle 2 by performing the same processes as shown in Embodiments 1 to 3 with the allowable power supply amount = 0.

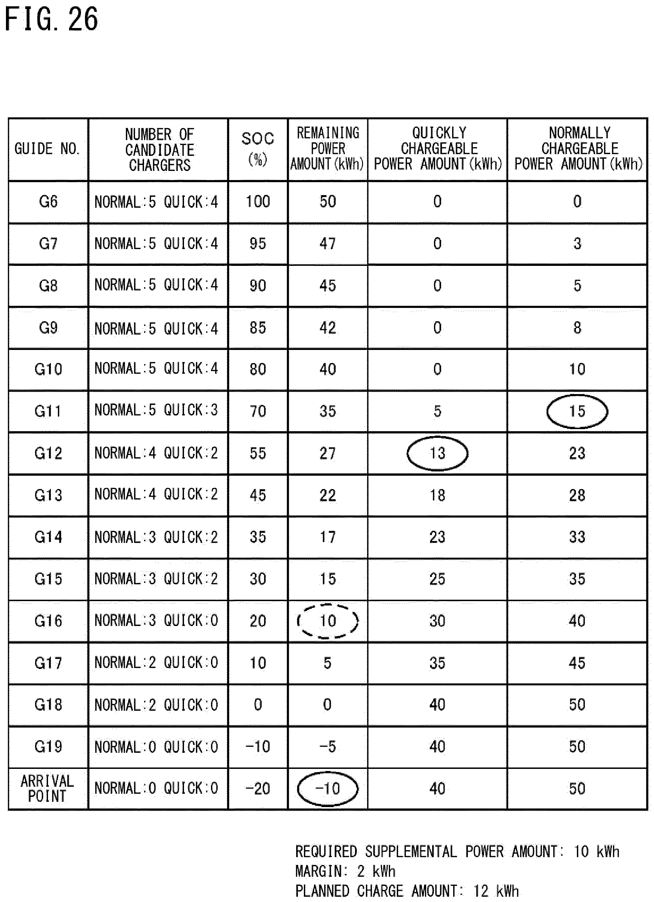

FIG. 26 shows the number of candidate chargers that is the number of chargers existing near a route from each guide point to the arrival point, and the battery condition at each guide point. FIG. 26 is a diagram similar to FIG. 21. For example, it is assumed that the required supplemental power amount is 10 kWh, and the margin is 2 kWh. In this case, the planned charge amount is 12 kWh.

In this case, a guide point where the quickly chargeable power amount becomes equal to or larger than the planned charge amount of 12 kWh for the first time is the guide point G12. Therefore, the charger search unit 65 calculates the guide point G12 as a search start point for a quick charger. Furthermore, a guide point where the normally chargeable power amount becomes equal to or larger than the planned charge amount of 12 kWh for the first time is the guide point G11. Therefore, the charger search unit 65 calculates the guide point G11 as a search start point for a normal charger.

<Modification 2>

The charger search unit 65 may search for a charger based on business hours of a charging station where the charger is installed. That is, if the planned travel time on the searched route is known, the charger search unit 65 searches for a charger that can start charging during the business hours and can complete the charging during the business hours.

According to Modification 2, chargers installed at charging stations that are open for business can be searched for. Therefore, it is possible to search for available chargers.

<Modification 3>

In Embodiments 1 to 3, the user inputs the departure point of the target vehicle 2. However, the departure point of the target vehicle 2 may be the current position of the target vehicle 2. In this case, the route search request unit 32 detects the position of the own vehicle by using a GPS signal that the GPS receiver 42 regularly receives. The route search request unit 32 may also use a GPS complementary signal or a GPS reinforcing signal that is transmitted from a quasi-zenith satellite (not shown) and received by the receiver to complement the GPS signal or correct the position of the own vehicle. Furthermore, the route search request unit 32 complements the vehicle position and direction, based on the input signals from the vehicle speed sensor 43 and the gyro sensor 44, and grasps the accurate current position of the target vehicle 2.

<Modification 4>

The travel energy estimation unit 60 of the charger search device 5 estimates the vehicle acceleration based on the driver information, but this process may not necessarily be performed. That is, the travel energy estimation unit 60 may calculate the speed model by using a predetermined vehicle acceleration.

<Modification 5>

The charger search device 5 has the function of a so-called car navigation system for searching for a route from a departure point to an arrival point, but the charger search device 5 may have a function of searching for a route for other purposes. Even if a route is searched for other purposes, travel energy when the target vehicle 2 travels on the searched route is similarly estimated, and a charger is searched for.

[Additional notes]

Some or all of the components forming each device described above may be implemented as one or a plurality of semiconductor devices such as system LSIs.

The above-described computer program may be distributed in a state of being stored in a computer-readable non-transitory storage medium, such as an HDD, a CD-ROM, or a semiconductor memory. Alternatively, the computer program may be distributed in a state of being transmitted via electric communication lines, wireless or wired communication lines, networks represented by the Internet, data broadcasting, and the like.

The above-described devices may be implemented as a plurality of computers or a plurality of processors.

Some or all of the functions of the above-described devices may be provided through cloud computing. That is, some or all of the functions of the devices may be implemented by a cloud server.

At least some parts of the embodiments and the modifications described above may be combined as desired.

The embodiments disclosed herein are merely illustrative in all aspects and should not be recognized as being restrictive. The scope of the present disclosure is defined by the scope of the claims rather than the meaning described above, and is intended to include meaning equivalent to the scope of the claims and all modifications within the scope.

**REFERENCE SIGNS LIST**

1       detector
2       target vehicle
3       in-vehicle device
4       base station
5       charger search device
7       network
8       traffic information providing server
9       probe vehicle
10      charger search system
30      control unit
31      input data reception unit
32      route search request unit
33      information providing unit
34      information acquisition unit
35      display control unit

40    communication unit
41    storage device
42    GPS receiver
43    vehicle speed sensor
44    gyro sensor
45    display
46    input device
47    bus
50    control unit
51    communication unit
52    storage device
53    bus
54    route search unit (route acquisition unit)
55    information acquisition unit (allowable power supply amount acquisition unit)
56    route division unit
57    speed correction unit
58    speed model calculation unit (speed model acquisition unit)
59    total weight acquisition unit
60    travel energy estimation unit (power consumption estimation unit)
61    required supplemental power amount calculation unit
62    chargeable power amount estimation unit
64    planned charge amount calculation unit
65    charger search unit
66    charger selection unit
80    control unit
81    communication unit
82    storage device
83    probe information acquisition unit
84    detection information acquisition unit
85    traffic condition specification unit
86    travel speed prediction unit
87    bus

**Claims**

1.  A charger search device, comprising:

    a route acquisition unit configured to acquire a first route that is composed of a road link on which an electric vehicle equipped with a battery is planned to travel from a first point to a second point;
    a route division unit configured to divide the first route into one or more sections, each section including a speed change prediction point at which a change in a travel speed of the electric vehicle is expected, each section being composed of one or a plurality of road links;
    a speed model acquisition unit configured to acquire a speed model for each section, the speed model indicating a temporal transition of the travel speed of the electric vehicle;
    a power consumption estimation unit configured to estimate, based on the speed model acquired for each section, power consumption in a case where the electric vehicle travels on the section;
    a required supplemental power amount calculation unit configured to calculate a required supplemental power amount that is an amount of power expected to be insufficient when the electric vehicle travels on the first route, based on an amount of remaining power of the battery at the first point, and the power consumption;
    a chargeable power amount estimation unit configured to estimate, based on the power consumption, a chargeable power amount to the battery at a time point when the electric vehicle passes through the speed change prediction point on the first route;
    a planned charge amount calculation unit configured to calculate a planned charge amount to the battery, based on the required supplemental power amount and a margin of a predetermined power amount; and
    a charger search unit configured to search for a charger capable of charging the battery, based on the chargeable power amount and the planned charge amount.

2.  The charger search device according to claim 1, further comprising an allowable power supply amount acquisition unit configured to acquire an allowable power supply amount that is an amount of power allowed to be supplied from the battery to a power supply target after the electric vehicle has arrived at the second point, wherein
the planned charge amount calculation unit calculates the planned charge amount, based on the required supplemental power amount, the margin, and the allowable power supply amount.

3. The charger search device according to claim 1 or claim 2, wherein
the charger search unit searches for the charger when the planned charge amount exceeds 0.

4. The charger search device according to any one of claims 1 to 3, wherein
the charger search unit searches for the charger, based on a second route on which the electric vehicle is planned to travel, the second route being a part of the first route, and ranging from the speed change prediction point at which the chargeable power amount becomes equal to or larger than the planned charge amount, to the second point.

5. The charger search device according to claim 4, wherein
the charger search unit searches for the charger capable of charging the battery from among chargers located within a predetermined distance from the second route.

6. The charger search device according to any one of claims 1 to 5, further comprising a charger selection unit configured to,

assuming that chargers having been found by the charger search unit are candidates for the charger for charging the battery,
calculate, for each candidate, a total time of a loss time due to the electric vehicle passing through the position of the candidate, and a charging time for the planned charge amount to the battery at the candidate, and
select a candidate having the shortest total time, as the charger for charging the battery.

7. The charger search device according to claim 6, wherein
the charger selection unit calculates the loss time, based on at least one of: information on traffic jams on a travel route to the position of the candidate; and information on regulations that regulate traveling on the travel route.

8. The charger search device according to any one of claims 1 to 7, wherein
the charger search unit searches for the charger, based on business hours of a charging station where the charger is installed.

9. The charger search device according to any one of claims 1 to 8, wherein

the chargeable power amount estimation unit estimates: a quickly chargeable power amount that is the chargeable power amount in a case where the battery is charged using a quick charger; and a normally chargeable power amount that is the chargeable power amount in a case where the battery is charged using a normal charger, and
the charger search unit searches for the quick charger capable of charging the battery, based on the quickly chargeable power amount and the planned charge amount, and searches for the normal charger capable of charging the battery, based on the normally chargeable power amount and the planned charge amount.

10. The charger search device according to claim 9, wherein
the charger search unit searches for the quick charger in preference to the normal charger.

11. A charger search method, comprising:

acquiring a first route that is composed of a road link on which an electric vehicle equipped with a battery is planned to travel from a first point to a second point;
dividing the first route into one or more sections, each section including a speed change prediction point at which a change in a travel speed of the electric vehicle is expected, each section being composed of one or a plurality of road links;
acquiring a speed model for each section, the speed model indicating a temporal transition of the travel speed of the electric vehicle;
estimating, based on the speed model acquired for each section, power consumption in a case where the electric vehicle travels on the section;

calculating a required supplemental power amount that is an amount of power expected to be insufficient when the electric vehicle travels on the first route, based on an amount of remaining power of the battery at the first point, and the power consumption;

estimating, based on the power consumption, a chargeable power amount to the battery at a time point when the electric vehicle passes through the speed change prediction point on the first route;

calculating a planned charge amount to the battery, based on the required supplemental power amount and a margin of a predetermined power amount; and

searching for a charger capable of charging the battery, based on the chargeable power amount and the planned charge amount.

12. A computer program configured to cause a computer to function as:

a route acquisition unit configured to acquire a first route that is composed of a road link on which an electric vehicle equipped with a battery is planned to travel from a first point to a second point;

a route division unit configured to divide the first route into one or more sections, each section including a speed change prediction point at which a change in a travel speed of the electric vehicle is expected, each section being composed of one or a plurality of road links;

a speed model acquisition unit configured to acquire a speed model for each section, the speed model indicating a temporal transition of the travel speed of the electric vehicle;

a power consumption estimation unit configured to estimate, based on the speed model acquired for each section, power consumption in a case where the electric vehicle travels on the section;

a required supplemental power amount calculation unit configured to calculate a required supplemental power amount that is an amount of power expected to be insufficient when the electric vehicle travels on the first route, based on an amount of remaining power of the battery at the first point, and the power consumption;

a chargeable power amount estimation unit configured to estimate, based on the power consumption, a chargeable power amount to the battery at a time point when the electric vehicle passes through the speed change prediction point on the first route;

a planned charge amount calculation unit configured to calculate a planned charge amount to the battery, based on the required supplemental power amount and a margin of a predetermined power amount; and

a charger search unit configured to search for a charger capable of charging the battery, based on the chargeable power amount and the planned charge amount.

# FIG. 1

TRAFFIC INFORMATION
PROVIDING SERVER

CHARGER SEARCH DEVICE

10

8

5

7

NETWORK

4

4

2

3

1

9

9

# FIG. 2

TRAFFIC INFORMATION PROVIDING SERVER 8

CONTROL UNIT 80

PROBE INFORMATION ACQUISITION UNIT 83

DETECTION INFORMATION ACQUISITION UNIT 84

TRAFFIC CONDITION SPECIFICATION UNIT 85

TRAVEL SPEED PREDICTION UNIT 86

COMMUNICATION UNIT 81

STORAGE DEVICE 82

87

EP 4 589 258 A1

# FIG. 3

**IN-VEHICLE DEVICE** — 3

**CONTROL UNIT (ECU)** — 30

| | |
|---|---|
| 31 — | INPUT DATA RECEPTION UNIT |
| 32 — | ROUTE SEARCH REQUEST UNIT |
| 33 — | INFORMATION PROVIDING UNIT |
| 34 — | INFORMATION ACQUISITION UNIT |
| 35 — | DISPLAY CONTROL UNIT |

| | |
|---|---|
| COMMUNICATION UNIT | 40 |
| STORAGE DEVICE | 41 |
| GPS RECEIVER | 42 |
| VEHICLE SPEED SENSOR | 43 |
| GYRO SENSOR | 44 |
| DISPLAY | 45 |
| INPUT DEVICE | 46 |

47

# FIG. 4

**CHARGER SEARCH DEVICE** — 5

**CONTROL UNIT** — 50

54 — ROUTE SEARCH UNIT

55 — INFORMATION ACQUISITION UNIT

56 — ROUTE DIVISION UNIT

57 — SPEED CORRECTION UNIT

58 — SPEED MODEL CALCULATION UNIT

59 — TOTAL WEIGHT ACQUISITION UNIT

60 — TRAVEL ENERGY ESTIMATION UNIT

61 — REQUIRED SUPPLEMENTAL POWER AMOUNT CALCULATION UNIT

62 — CHARGEABLE POWER AMOUNT ESTIMATION UNIT

64 — PLANNED CHARGE AMOUNT CALCULATION UNIT

65 — CHARGER SEARCH UNIT

66 — CHARGER SELECTION UNIT

COMMUNICATION UNIT — 51

STORAGE DEVICE — 52

53

# FIG. 5

FIG. 6

SPEED

SIGNAL STOP MODEL

TYPICAL
TRAVEL SPEED

0

T1 SECONDS

T2 SECONDS

TIME

SECTION TRAVEL TIME

FIG. 7

SPEED

DEDICATED SECTION MODEL
(OTHER THAN THE LAST)

TYPICAL
TRAVEL SPEED

0

TIME

SECTION TRAVEL TIME

FIG. 8

SPEED

DEDICATED SECTION MODEL (LAST)

TYPICAL
TRAVEL SPEED

0

TIME

T3 SECONDS

SECTION TRAVEL TIME

# FIG. 9

(a)

GUIDE SECTION X

SUB SECTION SA    SUB SECTION SB

GX

EX  EA  EB  EC  ED  EE  EY

LINK

UPSTREAM    DOWNSTREAM

GY

(b)

SPEED

TYPICAL
TRAVEL SPEED

0

TIME

SECTION TRAVEL TIME

○  GUIDE

●  LINK END POINT

━━  SEARCHED ROUTE

─  ROAD LINK OTHER THAN
SEARCHED ROUTE

# FIG. 10

(a)

GUIDE SECTION X

SUB SECTION SA

SUB SECTION SB

GX

ED EE GY

UPSTREAM

DOWNSTREAM

EX EA EB EC EY

(b)

GUIDE SECTION X

SUB SECTION SA

SUB SECTION SB

SUB SECTION SC

GX

ED EE GY

UPSTREAM

DOWNSTREAM

EX EA EB EC EY

(c)

SPEED

TYPICAL TRAVEL SPEED

0

TIME

SECTION TRAVEL TIME

○ GUIDE

● LINK END POINT

━━ SEARCHED ROUTE

── ROAD LINK OTHER THAN SEARCHED ROUTE

# FIG. 11

(a)

GUIDE SECTION X

SUB SECTION
SA

SUB SECTION
SB

GX

UPSTREAM

EX  EA  EB  EC

ED

GY

EY

DOWNSTREAM

(b)

GUIDE SECTION X

SUB SECTION
SA

SUB SECTION
SB1

SUB SECTION
SB2

GX

UPSTREAM

EX  EA  EB  EC

ED

GY

EY

DOWNSTREAM

(c)

SPEED

TYPICAL
TRAVEL SPEED

0

TIME

SECTION TRAVEL TIME

○  GUIDE

●  LINK END POINT

━━━  SEARCHED ROUTE

───  ROAD LINK OTHER THAN
SEARCHED ROUTE

## FIG. 12

| TARGET VEHICLE 2 | CHARGER SEARCH DEVICE 5 | TRAFFIC INFORMATION PROVIDING SERVER 8 | VEHICLE A | VEHICLE B | DETECTOR 1 |

INPUT DESTINATION S1

INPUT NUMBER OF OCCUPANTS AND LOAD CAPACITY S2

INPUT DRIVER INFORMATION S3

ROUTE SEARCH REQUEST(S4)

SEARCH ROUTE S5

ROUTE INFORMATION(S9)

PROBE INFORMATION(S6)

PROBE INFORMATION(S7)

DETECTION INFORMATION (S8)

SPECIFY TRAFFIC CONDITION S10

PREDICT TRAVEL SPEED S11

TRAFFIC CONDITION INFORMATION, SPEED INFORMATION(S12)

DIVIDE ROUTE S13

CORRECT SPEED S14

DRIVER INFORMATION(S15)

CALCULATE SPEED MODEL S16

NUMBER-OF-OCCUPANT INFORMATION, LOAD CAPACITY INFORMATION, VEHICLE IDENTIFICATION INFORMATION(S17)

CALCULATE TOTAL WEIGHT S18

ESTIMATE POWER CONSUMPTION S19

REMAINING POWER INFORMATION(S20)

CALCULATE REQUIRED SUPPLEMENTAL POWER AMOUNT S21

ESTIMATE CHARGEABLE POWER AMOUNT S22

EP 4 589 258 A1

# FIG. 13

| TARGET VEHICLE 2 | CHARGER SEARCH DEVICE 5 | TRAFFIC INFORMATION PROVIDING SERVER 8 | VEHICLE A | VEHICLE B | DETECTOR 1 |

INPUT ALLOWABLE POWER SUPPLY AMOUNT S23

ALLOWABLE POWER SUPPLY AMOUNT INFORMATION (S24)

CALCULATE PLANNED CHARGE AMOUNT S25

S26 PLANNED CHARGE AMOUNT>0

NO

ROUTE INFORMATION (S27)

YES

CALCULATE SEARCH START POINT S29

SEARCH FOR CHARGER AFTER SEARCH START POINT S30

RE-SEARCH ROUTE S31

ROUTE INFORMATION (S32)

SPECIFY TRAFFIC CONDITION S33

PREDICT TRAVEL SPEED S34

TRAFFIC CONDITION INFORMATION, SPEED INFORMATION (S35)

CALCULATE TOTAL TIME OF LOSS TIME AND CHARGING TIME S36

SELECT CHARGER WITH MINIMUM TOTAL TIME S37

ROUTE INFORMATION· CHARGER INFORMATION (S38)

DISPLAY INFORMATION S28

EP 4 589 258 A1

FIG. 14

EP 4 589 258 A1

FIG. 15

FIG. 16

# FIG. 17

| GUIDE NO. | HEADING DIRECTION | PRESENCE/ABSENCE OF TRAFFIC SIGNAL | ROAD TYPE | OFFSET SYNC AREA |
|-----------|-------------------|-------------------------------------|-----------|------------------|
| G6 | STRAIGHT AHEAD | PRESENT | LOCAL ROAD | A |
| G7 | STRAIGHT AHEAD | ABSENT | UNDERPASS | A |
| G8 | STRAIGHT AHEAD | PRESENT | LOCAL ROAD | A |
| G9 | STRAIGHT AHEAD | PRESENT | LOCAL ROAD | A |
| G10 | LEFT TURN | PRESENT | LOCAL ROAD | B |
| G11 | STRAIGHT AHEAD | ABSENT | BYPASS | − |
| G12 | STRAIGHT AHEAD | ABSENT | BYPASS | − |
| G13 | CURVE | ABSENT | BYPASS | − |
| G14 | STRAIGHT AHEAD | ABSENT | BYPASS | − |
| G15 | STRAIGHT AHEAD | ABSENT | BYPASS | − |
| G16 | STRAIGHT AHEAD | ABSENT | BYPASS | − |
| G17 | STRAIGHT AHEAD | ABSENT | BYPASS | − |
| G18 | STRAIGHT AHEAD | ABSENT | BYPASS | − |
| G19 | LEFT TURN | PRESENT | LOCAL ROAD | C |

# FIG. 18

```
        START
(SPEED MODEL CALCULATION)
            │
            ▼
      LOOP A
  REPEAT FOLLOWING
  STEPS FOR EACH GUIDE
            │
            │ S101
            ▼
      EXPRESSWAY? ──── YES ──────────────────────────────────┐
            │                                                  │
            │ NO                                               │
            │ S102                                             │
            ▼              S105                                │
    RIGHT OR LEFT ── NO ── TRAFFIC SIGNAL ── NO ──┐           │
    TURN POINT?           INSTALLATION                        │
            │             POINT?                   │           │
            │ YES              │ YES               │           │
            │ S103             │ S106          S108 ▼           │
            ▼                  ▼          DOWNSTREAM ADJACENT ── YES ──┐
    PREDICT ACCELERATION   PREDICT        GUIDE IS TRAFFIC SIGNAL      │
            │ S104         ACCELERATION   INSTALLATION POINT?          │
            ▼                  │ S107           │ NO                   │ S110
    CALCULATE RIGHT OR     CALCULATE            │ S109                 ▼
    LEFT TURN MODEL        SIGNAL STOP MODEL    ▼              PREDICT ACCELERATION
            │                  │          CALCULATE DEDICATED          │ S111
            │                  │          SECTION MODEL                ▼
            │                  │          (OTHER THAN THE LAST)  CALCULATE DEDICATED
            │                  │                │                SECTION MODEL
            │                  │                │                (LAST)
            ◄──────────────────┴────────────────┴──────────────────────┘
            │
            ▼
      LOOP A
            │
            ▼
        END
(SPEED MODEL CALCULATION)
```

FIG. 19

FIG. 20

# FIG. 21

| GUIDE NO. | NUMBER OF CANDIDATE CHARGERS | SOC (%) | REMAINING POWER AMOUNT (kWh) | QUICKLY CHARGEABLE POWER AMOUNT (kWh) | NORMALLY CHARGEABLE POWER AMOUNT (kWh) |
|---|---|---|---|---|---|
| G6 | NORMAL:5 QUICK:4 | 100 | 50 | 0 | 0 |
| G7 | NORMAL:5 QUICK:4 | 95 | 47 | 0 | 3 |
| G8 | NORMAL:5 QUICK:4 | 90 | 45 | 0 | 5 |
| G9 | NORMAL:5 QUICK:4 | 85 | 42 | 0 | 8 |
| G10 | NORMAL:5 QUICK:4 | 80 | 40 | 0 | 10 |
| G11 | NORMAL:5 QUICK:3 | 70 | 35 | 5 | (15) |
| G12 | NORMAL:4 QUICK:2 | 55 | 27 | 13 | 23 |
| G13 | NORMAL:4 QUICK:2 | 45 | 22 | (18) | 28 |
| G14 | NORMAL:3 QUICK:2 | 35 | 17 | 23 | 33 |
| G15 | NORMAL:3 QUICK:2 | 30 | 15 | 25 | 35 |
| G16 | NORMAL:3 QUICK:0 | 20 | (10) | 30 | 40 |
| G17 | NORMAL:2 QUICK:0 | 10 | 5 | 35 | 45 |
| G18 | NORMAL:2 QUICK:0 | 0 | 0 | 40 | 50 |
| G19 | NORMAL:0 QUICK:0 | -10 | -5 | 40 | 50 |
| ARRIVAL POINT | NORMAL:0 QUICK:0 | -20 | (-10) | 40 | 50 |

REQUIRED SUPPLEMENTAL POWER AMOUNT: 10 kWh
MARGIN: 2 kWh
ALLOWABLE POWER SUPPLY AMOUNT: 3 kWh
PLANNED CHARGE AMOUNT: 15 kWh

FIG. 22

O4  Q3  O1  Q1

SEARCH FOR
NORMAL CHARGER

G10  G7 G6
G9 G8
G11

Q2

SEARCH FOR QUICK CHARGER

G12

G19  O2

G18  G17  G16  G15  G14  G13

ARRIVAL POINT

O5  O3  ★ QUICK CHARGER  Q4

▲ NORMAL CHARGER

EP 4 589 258 A1

# FIG. 23

# FIG. 24

```
                    ┌──────────────┐
                    │    START     │
                    └──────┬───────┘
                           ▼
         ┌────────────────────────────────────┐
         │ SEARCH FOR QUICK CHARGER ON ROUTE   │  S201
         │ AFTER FIRST SEARCH START POINT      │
         └────────────────┬───────────────────┘
                          │                      S202
         ◇ DOES QUICK CHARGER EXIST? ◇─────── NO ──────┐
                          │                            │
                         YES                           │    S204
                          │          ┌─────────────────────────────────────┐
                          ▼          │ SEARCH FOR NORMAL CHARGER ON ROUTE   │
         ┌──────────────────────┐    │ AFTER SECOND SEARCH START POINT      │
         │ SELECT QUICK CHARGER  │ S203 └──────────────┬───────────────────┘
         └──────────┬───────────┘                      │            S205
                    │            ◇ DOES NORMAL CHARGER EXIST? ◇──── NO ────┐
                    │                                   │                  │
                    │                                  YES                 │
                    │                                   ▼                  │
                    │                 ┌──────────────────────┐             │
                    │                 │ CALCULATE CHARGING    │ S206        │
                    │                 │ TIME (A) FOR CHARGING │             │
                    │                 │ WITH NORMAL CHARGER   │             │
                    │                 └──────────┬───────────┘             │
```

EP 4 589 258 A1

EP 4 589 258 A1

FIG. 25

```
                        ┌─────────────┐
                        │    START    │
                        └──────┬──────┘
                               │
          ┌────────────────────────────────────┐  S301
          │ SEARCH FOR QUICK CHARGER ON ROUTE   │
          │ AFTER FIRST SEARCH START POINT      │
          └────────────────┬───────────────────┘
                           │            NO
          < DOES QUICK CHARGER EXIST? >─────────────────┐
      S302              │  YES                           │  S304
                        │              ┌─────────────────────────┐
                        │              │ SEARCH FOR QUICK CHARGER │
                        │              │ NEAR ROUTE AFTER FIRST   │
                        │              │ SEARCH START POINT       │
                        │              └────────────┬────────────┘
                        │                           │         S305   NO
                        │         < DOES QUICK CHARGER EXIST? >──────────┐
                        │                       │ YES                    │
                        │                       │            S306        │  S308
                        │              ┌────────────────────┐  ┌──────────────────────────────┐
                        │              │ CALCULATE TOTAL     │  │ SEARCH FOR NORMAL CHARGER    │
           S303         │              │ TIME OF LOSS TIME   │  │ NEAR ROUTE AFTER SECOND      │
  ┌──────────────────┐  │              │ DUE TO CHARGING     │  │ SEARCH START POINT           │
  │ SELECT QUICK     │  │              │ WITH QUICK CHARGER, │  └──────────────┬───────────────┘
  │ CHARGER          │  │              │ AND CHARGING TIME   │                 │            S309   NO
  └──────────────────┘  │              └──────────┬─────────┘  < DOES NORMAL CHARGER EXIST? >────┐
                        │                         │                       │ YES    S310          │  S311
                        │                  ┌──────────────┐  ┌────────────────────────┐  ┌──────────────────────────┐
                        │                  │ SELECT QUICK │  │ SELECT NORMAL CHARGER  │  │ SEARCH FOR NORMAL CHARGER│
                        │                  │ CHARGER WITH │  └───────────┬────────────┘  │ NEAR ROUTE AFTER SECOND  │
                        │                  │ MINIMUM      │              │               │ SEARCH START POINT       │
                        │                  │ TOTAL TIME   │              │               └────────────┬─────────────┘
                        │                  └──────┬───────┘              │                            │        S312   NO
                        │                         │                      │        < DOES NORMAL CHARGER EXIST? >────┐
                        │                         │                      │                    │ YES                 │
                        │                         │                      │          ┌──────────────────────────┐    │
                        │                         │                      │          │ CALCULATE TOTAL TIME OF  │ S313│
                        │                         │                      │          │ LOSS TIME DUE TO CHARGING│    │
                        │                         │                      │          │ WITH NORMAL CHARGER, AND │    │
                        │                         │                      │          │ CHARGING TIME            │    │
                        │                         │                      │          └────────────┬─────────────┘    │
                        │                         │                      │          ┌──────────────────────────┐    │
                        │                         │                      │          │ SELECT NORMAL CHARGER    │ S314│
                        │                         │                      │          │ WITH MINIMUM TOTAL TIME  │    │
                        │                         │                      │          └────────────┬─────────────┘    │
                        │                         │                      │                       │                  │
                        └─────────────────────────┴──────────────────────┴───────────────────────┴──────────────────┘
                               │
                        ┌──────┴──────┐
                        │     END     │
                        └─────────────┘
```

# FIG. 26

| GUIDE NO. | NUMBER OF CANDIDATE CHARGERS | SOC (%) | REMAINING POWER AMOUNT (kWh) | QUICKLY CHARGEABLE POWER AMOUNT (kWh) | NORMALLY CHARGEABLE POWER AMOUNT (kWh) |
|---|---|---|---|---|---|
| G6 | NORMAL:5 QUICK:4 | 100 | 50 | 0 | 0 |
| G7 | NORMAL:5 QUICK:4 | 95 | 47 | 0 | 3 |
| G8 | NORMAL:5 QUICK:4 | 90 | 45 | 0 | 5 |
| G9 | NORMAL:5 QUICK:4 | 85 | 42 | 0 | 8 |
| G10 | NORMAL:5 QUICK:4 | 80 | 40 | 0 | 10 |
| G11 | NORMAL:5 QUICK:3 | 70 | 35 | 5 | (15) |
| G12 | NORMAL:4 QUICK:2 | 55 | 27 | (13) | 23 |
| G13 | NORMAL:4 QUICK:2 | 45 | 22 | 18 | 28 |
| G14 | NORMAL:3 QUICK:2 | 35 | 17 | 23 | 33 |
| G15 | NORMAL:3 QUICK:2 | 30 | 15 | 25 | 35 |
| G16 | NORMAL:3 QUICK:0 | 20 | (10) | 30 | 40 |
| G17 | NORMAL:2 QUICK:0 | 10 | 5 | 35 | 45 |
| G18 | NORMAL:2 QUICK:0 | 0 | 0 | 40 | 50 |
| G19 | NORMAL:0 QUICK:0 | -10 | -5 | 40 | 50 |
| ARRIVAL POINT | NORMAL:0 QUICK:0 | -20 | (-10) | 40 | 50 |

REQUIRED SUPPLEMENTAL POWER AMOUNT: 10 kWh
MARGIN: 2 kWh
PLANNED CHARGE AMOUNT: 12 kWh

## INTERNATIONAL SEARCH REPORT

| International application No. |
| --- |
| **PCT/JP2023/028098** |

| A. | CLASSIFICATION OF SUBJECT MATTER |
| --- | --- |

***G01C 21/34***(2006.01)i; ***B60L 15/20***(2006.01)i; ***B60L 50/60***(2019.01)i; ***B60L 53/14***(2019.01)i; ***B60L 58/12***(2019.01)i; ***G08G 1/0969***(2006.01)i
FI:   G01C21/34; G08G1/0969; B60L15/20 J; B60L50/60; B60L53/14; B60L58/12

According to International Patent Classification (IPC) or to both national classification and IPC

| B. | FIELDS SEARCHED |
| --- | --- |

Minimum documentation searched (classification system followed by classification symbols)

G01C21/00-21/36; G09B29/00-29/14; G08G1/00-99/00; B60L1/00-3/12; B60L7/00-13/00; B60L15/00-58/40; B60K6/20-6/547; B60W10/00-20/50; G06Q10/00-10/30; G06Q30/00-30/08; G06Q50/00-50/20; G06Q50/26-99/00; G16Z99/00; B64B1/00-1/70; B64C1/00-99/00; B64D1/00-47/08; B64F1/00-5/60; B64G1/00-99/00; B64U10/00-80/86; G05D1/00-1/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2012-251989 A (DENSO CORP.) 20 December 2012 (2012-12-20)<br>paragraphs [0051]-[0056], fig. 6 | 1-12 |
| A | JP 2014-011849 A (TOSHIBA CORP.) 20 January 2014 (2014-01-20)<br>paragraphs [0038]-[0043], [0083]-[0085] | 1-12 |
| A | JP 2013-015424 A (ALPINE ELECTRONICS INC.) 24 January 2013 (2013-01-24)<br>paragraph [0030] | 1-12 |
| A | JP 2015-025709 A (SUMITOMO ELECTRIC INDUSTRIES, LTD.) 05 February 2015 (2015-02-05)<br>paragraphs [0014], [0051] | 1-12 |
| A | JP 2013-148379 A (ALPINE ELECTRONICS INC.) 01 August 2013 (2013-08-01)<br>paragraphs [0031]-[0041], fig. 5 | 1-12 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/028098** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2021-015087 A (AISIN AW CO., LTD.) 12 February 2021 (2021-02-12)<br>paragraph [0045], fig. 6 | 8 |

## INTERNATIONAL SEARCH REPORT
**Information on patent family members**

International application No.

**PCT/JP2023/028098**

| Patent document cited in search report | | | Publication date (day/month/year) | Patent family member(s) | Publication date (day/month/year) |
|---|---|---|---|---|---|
| JP | 2012-251989 | A | 20 December 2012 | US 2012/0290506 A1 paragraphs [0090]-[0095], fig. 6 | |
| JP | 2014-011849 | A | 20 January 2014 | (Family: none) | |
| JP | 2013-015424 | A | 24 January 2013 | (Family: none) | |
| JP | 2015-025709 | A | 05 February 2015 | (Family: none) | |
| JP | 2013-148379 | A | 01 August 2013 | (Family: none) | |
| JP | 2021-015087 | A | 12 February 2021 | (Family: none) | |

Form PCT/ISA/210 (patent family annex) (January 2015)

**EP 4 589 258 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022145737 A
- JP 2003262525 A
- JP H10170293 A